# EUROPEAN PATENT APPLICATION

(11) **EP 4 694 329 A1**
(43) Date of publication of application: **11.02.2026**
(21) Application number: 24778066.1
(22) Date of filing: 27.03.2024
(51) Int. Cl.: H04W 36/00

(54) **INFORMATION PROCESSING METHOD AND APPARATUS AND COMMUNICATION DEVICE**

(30) Priority: 31.03.2023 CN 202310338759
(71) Applicant: Datang Mobile Communications Equipment Co., Ltd., Beijing 100085 (CN)
(72) Inventor: TAO, Yuan, Beijing 100085 (CN); WANG, Hucheng, Beijing 100085 (CN); LIU, Xianfeng, Beijing 100085 (CN); LI, Yun, Beijing 100085 (CN); WANG, Yapeng, Beijing 100085 (CN)
(74) Representative: Studio Torta S.p.A.
(86) International application number: PCT/CN2024/084093
(87) International publication number: WO 2024/199280

(57) **Abstract**

The present application relates to the technical field of communications, and provides an information processing method and apparatus and a communication device. The method is executed by a communication device and comprises an information processing method which is executed by a first network function and comprises: receiving a mobility control policy sent by a second network function; and sending information to a target device according to the mobility control policy, wherein the information is used for the target device to execute a computing site selection processing flow.

## Description

### CROSS-REFERENCE TO RELATED APPLICATION

The present application claims priority to Chinese patent application No. 202310338759.X, entitled "Information Processing Method, Apparatus, and Communication Device" filed Mar. 31, 2023, the disclosure of which are incorporated herein by reference in its entirety.

### TECHNICAL FIELD

The present application relates to the field of communications technologies, and in particular, to an information processing method and apparatus, and a communications device.

### BACKGROUND

Based on the computing power network in the related art, the cloud computing center matches the optimal computing resource for the service requirement of the user based on the network state and the computing power state, calculates an optimal path from the user to a computing site (the computing site is also referred to as a computing node), and determines a forwarding path of the service. However, this manner is mainly directed to the bearer network, and is not applicable to the cloud-edge collaboration implemented based on the 5G system in combination with the computing power network. How to realize the re-selection of the computing site with the cloud-edge coordination is an urgent problem to be resolved.

### SUMMARY

Embodiments of the present application provide an information processing method and apparatus, and a communication device, to implement re-selection of a computing site for cloud-edge collaboration.

To resolve the foregoing technical problem, an information processing method, executed by a first network function is provided. The method includes: receiving a mobility control policy sent by a second network function; sending information to a target device according to the mobility control policy, wherein the information is used by the target device to execute a process of selecting a computing site.

Optionally, the sending information to a target device according to the mobility control policy includes at least one of the following: sending the mobility control policy to a terminal, the mobility control policy being used by the terminal to select a first access network node; sending an access network identifier in the mobility control policy to a second access network node, the access network identifier being used by the second access network node to determine the first access network node; sending first information in the mobility control policy to a third network function, the first information being used by the third network function to select a first user plane function; the first information includes at least one of the following: a Data Network Access Identifier (DNAI) of a target data network, an identifier of the first user plane function, an identifier of a first computing site; wherein the first computing site is the computing site to which the terminal is connected after selecting the computing site; wherein the first user plane function includes at least one of the following: a local Protocol Data Unit (PDU) session anchor user plane function; a user plane function with an uplink classifier or a branch point function.

An information processing method, executed by a terminal, is provided. The method includes: receiving a mobility control policy sent by a first network function, and selecting a first access network node according to the mobility control policy; or receiving target computing site information sent by an Application Sever (AS), and executing a process of relocating a computing site or a process of rediscovering a computing site according to the target computing site information.

Optionally, the target computing site information includes at least one of the following: an identifier of a first computing site, wherein the first computing site is a computing site to which the terminal is connected after selecting the computing site; an identifier of a second computing site, wherein the second computing site is a computing site to which the terminal is connected before selecting the computing site.

Optionally, the process of relocating a computing site or the process of rediscovering a computing site implements at least one of the following: updating an address of the second computing site to an address of the first computing site; establishing a session to the first computing site.

Optionally, the method further includes: establishing a session between the terminal and the first computing site according to the mobility control policy.

Optionally, the address of the first computing site is obtained through at least one of the following methods: obtaining from an Application Server (AS); obtaining from the mobility control policy sent by the first network function; or determining when performing computing site rediscovery according to the mobility control policy sent by the first network function.

An information processing method, executed by a second access network node, is provided. The method includes: receiving an access network identifier from a first network function, and establishing association with a first access network node according to the access network identifier.

An information processing method, executed by a second network function, is provided. The method includes: receiving computing power scheduling policy information sent by an Application Server (AS); determining a mobility control policy according to the computing power scheduling policy information; sending the mobility control policy to a third network function or the first network function.

Optionally, the computing power scheduling policy information is obtained by the Application Server (AS) when a first condition is satisfied; wherein the first condition includes one of the following: receiving location information of the terminal sent by the second network function; detecting that the second computing site is not applicable to the terminal, wherein the second computing site is a computing site to which the terminal is connected before selecting the computing site; detecting that a cell accessed by the terminal does not meet a connection requirement of the terminal; receiving a signal measurement report of the terminal sent by the second network function.

Optionally, the method further includes receiving location information of the terminal sent by the first network function or the third network function, and sending the location information of the terminal to the Application Server (AS).

Optionally, the method further includes: sending a subscription notification for a terminal location change event to the first network function or the third network function; or sending terminal location request information to the first network function or the third network function.

Optionally, the method further includes: receiving a signal measurement report of the terminal sent by the terminal or the second access network node; sending the signal measurement report of the terminal to the Application Server (AS).

The method further includes: sending a subscription notification for a signal measurement report to the terminal or the second access network node; or sending signal measurement report request information to the terminal or the second access network node.

An information processing method, executed by an Application Server (AS), is provided. The method includes: obtaining computing power scheduling policy information when a first condition is satisfied; according to the computing power scheduling policy information, sending target computing site information to the terminal; and/or sending the computing power scheduling policy information to the second network function, the computing power scheduling policy information being used by the second network function to determine a mobility control policy; wherein the first condition includes one of the following: receiving location information of the terminal sent by the second network function; detecting that the second computing site is not applicable to the terminal, wherein the second computing site is a computing site to which the terminal is connected before selecting the computing site; detecting that a cell accessed by the terminal does not meet a connection requirement of the terminal; receiving a signal measurement report of the terminal sent by the second network function.

Optionally, the method further includes: sending the target computing site information to the terminal according to the computing power scheduling policy information.

Optionally, the target computing site information includes at least one of the following: an identifier of a first computing site, wherein the first computing site is a computing site to which the terminal is connected after selecting the computing site; an identifier of the second computing site.

Optionally, the method further includes: sending the computing power scheduling policy information to the second network function, the computing power scheduling policy information being used by the second network function to determine a mobility control policy.

Optionally, before obtaining the computing power scheduling policy information, the method further includes: determining an access network identifier.

An information processing method, executed by a third network function, is provided. The method includes: receiving the mobility control policy transmitted from the second network function, and executing a process of relocating a computing site or a process of rediscovering a computing site according to the identifier of the first computing site determined from the mobility control policy; or receiving first information sent by the first network function, and selecting a first user plane function according to the first information; wherein the first user plane function includes at least one of the following: a local Protocol Data Unit (PDU) session anchor user plane function; a user plane function with an uplink classifier or a branch point function; the first information includes at least one of the following: a Data Network Access Identifier (DNAI) of a target data network; an identifier of the first user plane function; an identifier of the first computing site, wherein the first computing site is a computing site to which the terminal is connected after selecting the computing site.

A communication device is provided. The communication device is a first network function, the communication device includes a memory, a transceiver, and a processor: the memory is configured to store a computer program; the transceiver is configured to send and receive data under the control of the processor; the processor is configured to read the computer program in the memory and perform the following operations: receiving a mobility control policy sent by a second network function; sending information to a target device according to the mobility control policy, wherein the information is used by the target device to execute a process of selecting a computing site.

Optionally, the processor is configured to read the computer program in the memory and perform at least one of the following operations: sending the mobility control policy to a terminal, the mobility control policy being used by the terminal to select a first access network node; sending an access network identifier in the mobility control policy to a second access network node, the access network identifier being used by the second access network node to determine the first access network node; sending first information in the mobility control policy to a third network function, the first information being used by the third network function to select a first user plane function; the first information includes at least one of the following: a Data Network Access Identifier (DNAI) of a target data network, an identifier of the first user plane function, an identifier of a first computing site; wherein the first computing site is a computing site to which the terminal is connected after selecting the computing site; wherein the first user plane function includes at least one of the following: a local Protocol Data Unit (PDU) session anchor user plane function; a user plane function with an uplink classifier or a branch point function.

A communication device is provided. The communication device is a terminal, the communication device including a memory, a transceiver, and a processor: the memory is configured to store a computer program; the transceiver is configured to send and receive data under the control of the processor; the processor is configured to read the computer program in the memory and perform the following operations: receiving a mobility control policy sent by a first network function, and selecting a first access network node according to the mobility control policy; or receiving target computing site information sent by an Application Server (AS), and executing a process of relocating a computing site or a process of rediscovering a computing site according to the target computing site information.

Optionally, the target computing site information includes at least one of the following: an identifier of a first computing site, wherein the first computing site is a computing site to which the terminal is connected after selecting the computing site; an identifier of a second computing site, wherein the second computing site is a computing site to which the terminal is connected before selecting the computing site.

Optionally, the process of relocating a computing site or the process of rediscovering a computing site implements at least one of the following: updating an address of the second computing site to an address of the first computing site; establishing a session to the first computing site.

Optionally, the processor is configured to read the computer program in the memory and further perform the following operation: establishing a session between the terminal and the first computing site according to the mobility control policy.

Optionally, obtaining the address of the first computing site includes one of the following: obtaining from an Application Server (AS); obtaining from the mobility control policy sent by the first network function; or determining when performing computing site rediscovery according to the mobility control policy sent by the first network function.

A communication device is provided. The communication device is a second access network node. The second access network node includes a memory, a transceiver, a processor, the memory is configured to store a computer program; the transceiver is configured to send and receive data under the control of the processor; the processor is configured to read the computer program in the memory and perform the following operations: receiving an access network identifier sent by the first network function, and establishing association with the first access network node according to the access network identifier.

A communication device is provided. The communication device is a second network function, the communication device includes a memory, a transceiver, and a processor: the memory is configured to store a computer program; the transceiver is configured to send and receive data under the control of the processor; the processor is configured to read the computer program in the memory and perform the following operations: receiving computing power scheduling policy information sent by an Application Server (AS); determining a mobility control policy according to the computing power scheduling policy information; sending the mobility control policy to a third network function or the first network function.

A communication device is provided, wherein the communication device is an Application Server (AS), the communication device includes a memory, a transceiver, and a processor: the memory is configured to store a computer program; the transceiver is configured to send and receive data under the control of the processor; the processor is configured to read the computer program in the memory and perform the following operations: obtaining computing power scheduling policy information when a first condition is satisfied; according to the computing power scheduling policy information, sending target computing site information to the terminal; and/or sending the computing power scheduling policy information to the second network function, the computing power scheduling policy information being used by the second network function to determine a mobility control policy; wherein the first condition includes one of the following: receiving location information of the terminal sent by the second network function; detecting that the second computing site is not applicable to the terminal, wherein the second computing site is a computing site to which the terminal is connected before selecting the computing site; detecting that a cell accessed by the terminal does not meet a connection requirement of the terminal; receiving a signal measurement report of the terminal sent by the second network function.

A communication device is provided. The communication device is a third network function, the communication device includes a memory, a transceiver, and a processor, the memory is configured to store a computer program; the transceiver is configured to send and receive data under the control of the processor; the processor is configured to read the computer program in the memory and perform the following operations: receiving the mobility control policy transmitted from the second network function, and executing a process of relocating a computing site or a process of rediscovering a computing site according to the identifier of the first computing site determined from the mobility control policy; or receiving first information sent by the first network function, and selecting a first user plane function according to the first information; wherein the first user plane function includes at least one of the following: a local Protocol Data Unit (PDU) session anchor user plane function; a user plane function with an uplink classifier or a branch point function; the first information includes at least one of the following: a Data Network Access Identifier (DNAI) of a target data network; an identifier of the first user plane function; an identifier of the first computing site, wherein the first computing site is a computing site to which the terminal is connected after selecting the computing site.

An information processing apparatus, applied to a first network function, is provided. The apparatus includes: a first receiving unit, configured to receive a mobility control policy sent by a second network function; a first execution unit, configured to send information to a target device according to the mobility control policy, wherein the information is used by the target device to execute a process of selecting a computing site.

An information processing apparatus, applied to a terminal, is provided. The apparatus includes: a second receiving unit, configured to receive a mobility control policy sent by a first network function and select a first access network node according to the mobility control policy; or receive target computing site information sent by an Application Server (AS) and execute a process of relocating a computing site or a process of rediscovering a computing site according to the target computing site information.

An information processing apparatus is provided. The apparatus is applied to a second access network node. The apparatus includes a third receiving unit, configured to receive an access network identifier sent by the first network function, and a determining unit, configured to establish association with the first access network node according to the access network identifier.

An information processing apparatus, applied to a second network function, is provided. The apparatus includes: a fourth receiving unit, configured to receive computing power scheduling policy information sent by an Application Server (AS); a second determination unit, configured to determine a mobility control policy according to the computing power scheduling policy information; a first sending unit, configured to send the mobility control policy to a third network function or the first network function.

An information processing apparatus, applied to an Application Server (AS), is provided. The apparatus includes: an obtaining unit, configured to obtain computing power scheduling policy information when a first condition is satisfied; wherein the first condition includes one of the following: receiving location information of the terminal sent by the second network function; detecting that the second computing site is not applicable to the terminal, wherein the second computing site is a computing site to which the terminal is connected before selecting the computing site; detecting that a cell accessed by the terminal does not meet a connection requirement of the terminal; receiving a signal measurement report of the terminal sent by the second network function.

An information processing apparatus, applied to a third network function, is provided. The apparatus includes: a second execution unit, configured to receive a mobility control policy transmitted from the second network function, and executing a process of relocating a computing site or a process of rediscovering a computing site according to the identifier of the first computing site determined from the mobility control policy; or receive first information sent by the first network function, and select a first user plane function according to the first information; wherein the first user plane function includes at least one of the following: a local Protocol Data Unit (PDU) session anchor user plane function; a user plane function with an uplink classifier or a branch point function; the first information includes at least one of the following: a Data Network Access Identifier (DNAI) of a target data network; an identifier of the first user plane function; an identifier of the first computing site, wherein the first computing site is a computing site to which the terminal is connected after selecting the computing site.

A processor-readable storage medium is provided, wherein the processor-readable storage medium stores a computer program, and the computer program is configured to cause a processor to execute the method according to the above.

The beneficial effects of the present application are as follows:

In the foregoing solution, by implementing the re-selection of the computing site based on the mobility control policy, it can be ensured that the terminal can be connected to a suitable computing site, thereby ensuring stable operation of the system.

### BRIEF DESCRIPTION OF THE DRAWINGS

In order to more clearly illustrate the technical solutions in the embodiments of the present application or the related art, the following briefly describes the accompanying drawings required for describing the embodiments or the related art. Apparently, the accompanying drawings in the following description are merely some embodiments described in the present application. For those of ordinary skill in the art, other drawings may be obtained based on these accompanying drawings without creative efforts.
FIG. 1 shows a schematic diagram of an EAS architecture supported by 5GS through UL CL/BP;
FIG. 2 shows a network architecture diagram of cloud-edge collaboration;
FIG. 3 is a first schematic flowchart of an information processing method according to an embodiment of the present application;
FIG. 4 is a schematic flowchart of an application case 1;
FIG. 5 is a schematic flowchart of an application case 2;
FIG. 6 is a schematic flowchart of an application case 3;
FIG. 7 is a second schematic flowchart of an information processing method according to an embodiment of the present application;
FIG. 8 is a third schematic flowchart of an information processing method according to an embodiment of the present application;
FIG. 9 is a fourth schematic flowchart of an information processing method according to an embodiment of the present application;
FIG. 10 is a fifth schematic flowchart of an information processing method according to an embodiment of the present application;
FIG. 11 is a sixth schematic flowchart of an information processing method according to an embodiment of the present application;
FIG. 12 is a first schematic diagram of units of an information processing apparatus according to an embodiment of the present application;
FIG. 13 is a structural diagram of a first network function according to an embodiment of the present application;
FIG. 14 is a second schematic diagram of units of an information processing apparatus according to an embodiment of the present application;
FIG. 15 is a structural diagram of a terminal according to an embodiment of the present application;
FIG. 16 is a third schematic diagram of units of an information processing apparatus according to an embodiment of the present application;
FIG. 17 is a fourth schematic diagram of units of an information processing apparatus according to an embodiment of the present application;
FIG. 18 is a fifth schematic diagram of units of an information processing apparatus according to an embodiment of the present application;
FIG. 19 is a sixth schematic diagram of units of an information processing apparatus according to an embodiment of the present application.

### DETAILED DESCRIPTION

The technical solutions in the embodiments of the present application will be clearly and completely described below with reference to the accompanying drawings in the embodiments of the present application. Apparently, the described embodiments are some rather than all of the embodiments of the present application. All other embodiments obtained by a person of ordinary skill in the art based on the embodiments of the present application without creative efforts shall fall within the protection scope of the present application.

The terms "first", "second", and the like in the specification and claims of the present application are used to distinguish similar objects, and are not necessarily used to describe a specific order or sequence. It should be understood that the data used in this way may be interchanged under appropriate circumstances, so that the embodiments of the present disclosure described herein are implemented in an order other than those illustrated or described herein. In addition, the terms "include" and "have" and any deformation thereof are intended to cover a non-exclusive inclusion, for example, a process, method, system, product, or device that includes a series of steps or units is not necessarily limited to those steps or units listed clearly, but may include other steps or units that are not clearly listed or inherent to these processes, methods, products, or devices.

In the embodiments of the present application, the term "and/or" describes an association relationship of associated objects, indicating that there may be three relationships, for example, A and/or B may indicate that A exists alone, both A and B exist, and B exists alone. The character "/" generally indicates an "or" relationship between associated objects. In this embodiment of the present application, the term "a plurality of" means two or more, and other quantifiers are similar to each other.

In the embodiments of the present application, words such as "exemplary" or "for example" are used to represent examples, illustrations, or descriptions. Any embodiment or design scheme described as "exemplary" or "for example" in the embodiments of the present application should not be construed as being more preferred or advantageous over other embodiments or designs. Exactly, words such as "exemplary" or "for example" are used to present related concepts in a specific manner.

The following describes embodiments of the present application with reference to the accompanying drawings. The information processing method and apparatus, and the communication device provided in this embodiment of the present application may be applied to a wireless communication system. The wireless communication system may be a system using a 5th generation (5G) mobile communication technology (hereinafter referred to as a 5G system for short), and a person skilled in the art may understand that the 5G NR system is only an example, and is not a limitation.

First, based on the technical solutions provided in the present application, some technical terms that may be involved are described.

### I-Computing Power Network

The computing power network needs to support a computing network service orchestration management function, mainly uses related capabilities of life cycle management of the computing power service on each computing site, supports computing power service experience, intelligent orchestration and scheduling computing power to a suitable computing site, and specifically needs to meet the following technical requirements:
supporting management of a computing power service image, including addition, version update, and deletion;
supporting instantiation, updating, scaling, and instance termination of the computing power service;
based on a policy or artificial intelligence (AI) algorithm, interacting with a computing power service management function, supporting an instantiation, service update, elastic expansion capacity, and service termination of the existing computing power service on the one or more computing sites according to the computing power quality requirements;
supporting that heterogeneous computing power resource and the network resource on the computing site are reserved, allocated, and released.

The method supports establishing a network connection between a node and a node, a node and a user, and providing a Service Level Agreement (SLA) of a corresponding level according to the computing power quality requirement, and supporting sensing of the computing site state, the network state, and the computing power service state, so as to evaluate the quality of the computing power service.

**In** addition, the computing network management center may further receive a service serving request, and schedule the service, specifically:
the computing network management center generates a service scheduling policy based on the computing power resource and the network resource of the network; and
sends the scheduling policy to the computing network control node, to determine a forwarding path of the service, and schedule the service to the corresponding computing power routing node for processing.

The computing network management center directly sends the computing power resource information of the network to the computing network control node. The computing network control node generates a scheduling policy of the service based on the computing power resource information and the network resource, and is configured to determine a forwarding path of the service, and schedule the service to the corresponding computing power routing node for processing.

The computing network management center directly sends the computing power resource information of the network to the computing power routing node. The computing power routing node generates a scheduling policy of the service based on the computing power resource information and the network resource, and is configured to determine a forwarding path of the service, and schedule the service to the corresponding computing power routing node for processing.

### II. 5G Mobile Edge Computation

In a Mobile Edge Computing (MEC) technology, a computing storage capability and a service serving capability are migrated to a network edge, and data is not transmitted back to the cloud as much as possible, thereby reducing a waiting time and a network cost of the round-trip of data to cloud. Based on the 5G distributed cloud infrastructure, the 5G user plane and the 5G MEC node are constructed on the edge cloud, and the 5G MEC node provides the MEC application platform to implement the deployment and management capabilities of the third-party application. The user may obtain the service through the MEC application.

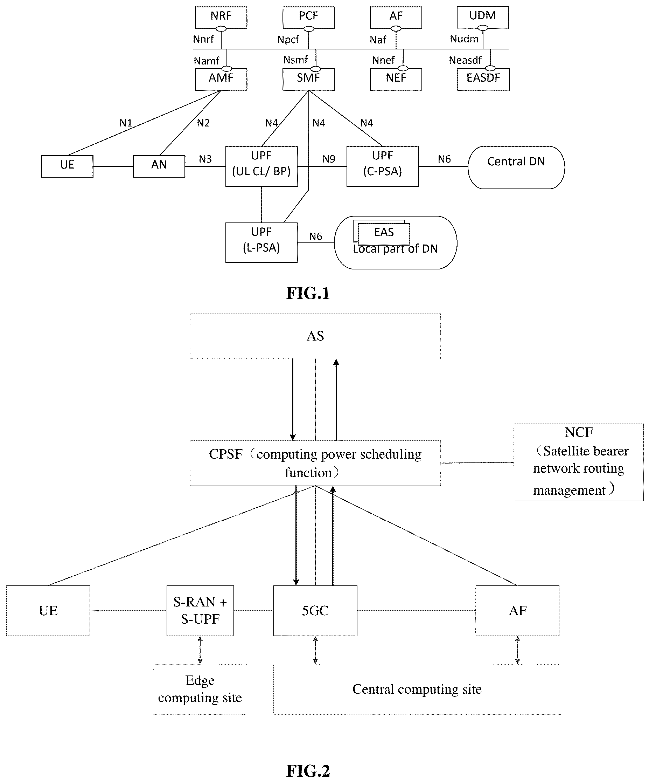

In order to support selective routing of data to the DN, the SMF may control a data path of the PDU session to ensure that the PDU session can correspond to a plurality of N6 interfaces at the same time, and each anchor supporting the PDU session provides different access paths to the same DN to implement local offloading, which may be referred to as a session breakout connection model through an UL CL (Uplink Classifier) function and an IPv6 multi-homing function branching point (Branching Point, BP). The 5GS supports the EAS architecture through the UL CL/BP support as shown in FIG. 1

The main network functions in the 5GS architecture are described as follows:
AMF: Access and Mobility Management Function, registration, connection management, etc.
UPF: User Plan Function. External PDU Session Node, Packet Routing, and Forwarding Interconnected with the Data Network.
SMF: Session Management Function, session establishment, deletion, user plane selection and control, UE IP allocation, etc.
AF: Application Function. Interacting with the 3 GPP core network to provide traffic. Based on the operator deployment situation, the trusted AF may directly interact with the related NF, and the untrusted AF cannot directly interact with the NF, but should be performed through a network exposure function (NEF) by using an exposure architecture.
PCF: Policy Control Function. A unified policy framework is supported to manage network behavior and provide policy rules for control plane NF execution.
NEF: Network Exposure Function. Providing the functionality of securely exposing traffic and capabilities provided by a 3GPP network to an external network.
EASDF: Edge Application Server Discovery Function. Based on the SMF indication, a domain name system (DNS) message is processed.
EAS: Edge Application Server. An edge service is provided.

In the related art, a computing power network is mainly directed to a bearer network, and how to implement cloud-edge collaboration based on a 5G system in combination with a computing power network has no research. In addition, the current 5G mobile edge calculation only considers the locations of the UE and the edge application server for the selection of the edge application server, and does not consider the requirement of the UE for the computing power and the computing power supported by the edge application server, and therefore, the appropriate edge application server cannot be reselected.

Based on the analysis, an embodiment of the present application provides an information processing method and apparatus, and a communication device, to implement re-selection of a computing site that implements a cloud-edge collaboration.

The method and the apparatus are based on the same application concept, and because the method and the apparatus resolve a problem of a problem, implementation of the apparatus and the method may be referred to each other, and details are not described herein again.

First, it should be noted that the embodiments of the present application are applied to a cloud-edge collaborative network architecture supporting a cloud-edge collaborative computing power service, and specifically, as shown in FIG. 2, the network architecture includes:
an Application Server (AS);
a computing power scheduling function (CPSF), wherein the Application Server is in communication connection with the computing power scheduling function through a bearer network;
a core network (for example, a 5th Generation Core Network (5GC) of a fifth generation mobile communication system, where the computing power scheduling function is communicatively connected to the core network through a bearer network, and the Application Server obtains network resource data from the core network through the computing power scheduling function; and
a terminal (that is, a user equipment (UE)) that is communicatively connected to the computing power scheduling function through a bearer network;
an application function (AF) connected to the computing power scheduling function through a bearer network;
a radio access network (RAN) communicatively connected to the terminal and the core network through a bearer network, respectively;
a user plane function (UPF) connected to the terminal and the core network through a bearer network;
a computing site communicatively connected to the access network, the user plane function, the core network, and the application function through the bearer network;
a network control center (for example, a network control function (NCF)) that is communicatively connected to the computing power scheduling function through a bearer network, where the network control center is configured to transmit satellite network resource data to the computing power scheduling function.

It should be noted that, optionally, an AS (such as a cloud computing center, a cloud network fusion orchestration center, etc. which is a third-party platform that is independent of a core network, a service system, etc.) performs computing power service orchestration for computing power tasks received by an application layer, or when cooperative management is performed on a computing power service, a network resource needs to be perceived on a maintained computing power resource basis. In other words, the AS provides functions of the cloud computing center by the operation service platform, to implement global computing power resources and network resource sensing and uniform allocation of the cloud side terminals, thereby implementing collaborative management and computing power service orchestration of the cloud computing resources and the network resources. The CPSF (which may also be referred to as a CPSF entity, a CPSF network element, or a CPSF device) may be used as a network function newly added in the core network, or an independent computing power scheduling function network element platform that may be hung outside the core network, so as to play an intermediate layer role that underlies the core network and the cloud computing center. The CPSF provides a normalization interface upward, realizes sensing and aggregation of global network resource data, reports the timing and/or real-time sensing network resource data to the AS, the AS perceives the global network resource and the computing power resource, and provides data support for the computing power service orchestration and the resource allocation for the cloud-edge collaboration. Optionally, in one case, the AS may be co-located with the AF. At the same time, the CPSF receives the computing power scheduling policy of the cloud computing center, and derives the network policy applicable to the core network, so as to implement service offloading, Quality of Service (QoS) control, mobility management, and the like of the user, and provide the on-demand service for the user. The CPSF may be co-located with a policy control function (PCF).

Optionally, the computing site may include an edge computing site and a central computing site, and optionally, the edge computing site is connected to a RAN (for example, a network device (for example, a base station)) and a UPF (which may also be referred to as a UPF entity, a UPF network element, or a UPF device); optionally, the edge computing site may be an edge application server (EAS), and the central computing site is connected to a core network and an application function.

Optionally, the CPSF obtains the satellite network data by interacting with the NCF, and reports the satellite network data to the AS as part of the network resource data. At the same time, the computing power scheduling policy generated by the AS includes an optimal forwarding path between the computing power demand party and the computing power service node, and the CPSF derives, based on the optimal forwarding path and the tunnel information of the user plane, the satellite bearer network routing configuration, and notifies the ground NCF network element to complete the route configuration.

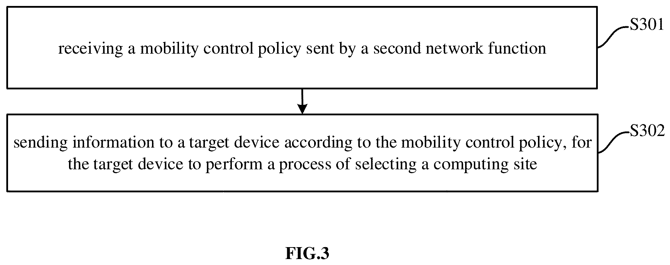

As shown in FIG. 3, an embodiment of the present application provides an information processing method, performed by a first network function, including:
step S301, receiving a mobility control policy sent by a second network function;
step S302, sending information to a target device according to the mobility control policy, for the target device to perform a process of selecting a computing site;
it should be noted that the target device in this embodiment of the present application includes at least one of the following: a terminal, a second access network node, and a third network function.

Optionally, the first network function needs to send appropriate information to the mobility control policy based on an operation that needs to be performed by different target devices, information sent to the target device is generally a full set or a subset of information included in the mobility control policy.

Optionally, the mobility control policy in this embodiment of the present application includes at least one of the following:

A101, an access network identifier;
it should be noted that the access network identifier may be an identifier of the first access network node or an identifier of the second cell; and
it should be noted that the first access network node may be understood as a target access network node, and the second cell may be understood as a target cell.

A102, terminal identifier;
for example, the terminal identifier may be understood as a unique identifier of the terminal, for example, a subscription permanent identifier (SUPI) of the terminal.

A103, an identifier of the first computing site;
the first computing site is a computing site connected to the terminal after selection of the computing site is performed, that is, the first computing site may be understood as a new computing site or a target computing site.

It should be noted that the identifier of the first computing site may be an IP address of the first computing site, or may be a fully qualified domain name (FQDN) of the first computing site.

A104, an identifier of the second computing site;
the second computing site is a computing site connected to the terminal before the computing site is selected, that is, the second computing site may be understood as an old computing site or a source computing site.

It should be noted that the identifier of the second computing site may be an IP address of the second computing site, or may be an FQDN of the second computing site.

A105, a data network access identifier (DNAI) of the target data network;
it should be noted that the target data network may be understood as a data network that the terminal has not yet been connected to and that needs to be connected to.

A106, identifier of a Local Protocol Data Unit (PDU) session anchor user plane function;
A107, an identifier of a target user plane function with an uplink classifier or a branch point function;
it should be noted that the target user plane function refers to a user plane function connected to the terminal after selection of the computing site is performed.

A108, an application identifier;
A109, the computing site re-discovery indication;
it should be noted that the computing site re-discovery indication is used to indicate that the re-discovery of a computing site needs to be performed.
A110, N6 routing information;
A111: the computing site relocation indication.

It should be noted that the computing site relocation indication is used to indicate that relocation of the computing site needs to be performed.

It should be noted that, when reselection of the computing site is performed, if the access network node connected to the terminal is unchanged and the computing site and the user plane function need to be changed, the mobility control policy shall include at least one of A102-A111. When reselection of the computing site is performed, if the access network node connected to the terminal, the computing site, and the user plane function all need to be changed, the mobility control policy shall include at least one of A101-A111.

It should be noted that, the first network function in this embodiment of the present application refers to an AMF in a core network, the second network function refers to a CPSF in a cloud-edge collaborative network architecture, and the third network function refers to an SMF in a core network.

Optionally, an optional implementation of obtaining the mobility control policy by the second network function is: receiving computing power scheduling policy information sent by the AS; and determining a mobility control policy according to the computing power scheduling policy information.

Optionally, the computing power scheduling policy information in this embodiment of the present application includes at least one of the following:
A21, an access network identifier;
it should be noted that the access network identifier may be an identifier of the first access network node or an identifier of the second cell;
A22, an identifier of the first computing site;
for example, the identifier is an IP address of the computing site;
A23, an identifier of a local PDU session anchor user plane function;
A24, an identifier of a target user plane function with an uplink classifier or a branch point function;
it should be noted that the target user plane function refers to a user plane function connected to the terminal after selection of the computing site is performed;
A25, a DNAI of the target data network;
A26, terminal identifier;
for example, the terminal identifier is a universal serial interface (GPSI) of the terminal.

Optionally, the computing power scheduling policy information is obtained when the AS satisfies a first condition.

Specifically, the first condition includes one of the following:
B11, receiving location information of the terminal sent by the second network function;
it should be noted that in this case, the second network function needs to first obtain the location information of the terminal from the first network function or the third network function (the third network function is the SMF); and optionally, the second network function may send a subscription notification of the location change event of the terminal to the first network function or the third network function, to obtain location information of the terminal; or the second network function may alternatively send the terminal location request information to the first network function or the third network function, to obtain location information of the terminal. It may be understood that the second network function may obtain the location information of the terminal from the AMF or the SMF by using a subscription notification or an active request.

Specifically, an implementation process of the subscription notification mode is as follows: the CPSF invokes Nsmf_EventExposure_Subscribe to subscribe to the location change event of the terminal to the SMF or invokes Namf_EventExposure_Subscribe to subscribe to the location change event of the terminal to the AMF; or the SMF or the AMF reports the location information of the terminal (for example, whether the cell identifier (e.g. Cell ID) or the tracking area (TA) of the cell in which the terminal is currently located is located in the area of interest (Area of Interest)). The AMF sends the location information of the terminal to the CPSF by invoking the Namf_EventExposure_Notify service operation, or the AMF calls the Namf_EventExposure_Notify to the SMF, and then the SMF sends the Nsmf_EventExposure_Notify to the CPSF.

Specifically, an implementation process of the active request mode is as follows: the CPSF sends the request information to the SMF or the AMF to request the real-time location of the terminal. The CPSF receives the location information of the terminal sent by the SMF or the AMF, and sends the location information to the AS.

B12, monitoring that the second computing site is not applicable to the terminal;
for example, the AS monitors that the load of the second computing site connected to the terminal is too large, and cannot meet the computing power requirement of the terminal.

It should be noted that the foregoing B11 and B12 are mainly applicable to cases where the access network node connected to the terminal is unchanged, and the computing site and the user plane function need to be changed.

B13, monitoring that the cell accessed by the terminal does not meet the connection requirement of the terminal;
for example, when the AS monitors satellite movement, the terminal needs to switch an accessed cell, and in this case, the AS needs to reselect the target access network node for the terminal.

B14, receiving a signal measurement report of the terminal sent by the second network function;
it should be noted that in this case, the second network function needs to first obtain the signal measurement report of the terminal from the source access network node connected to the terminal or the terminal; optionally, the second network function may send the subscription notification of the signal measurement report to the terminal or the second access network node to obtain the signal measurement report of the terminal; or the second network function may send the signal measurement report request information to the terminal or the second access network node, to obtain the signal measurement report of the terminal. It may be understood that the second network function may obtain the signal measurement report of the terminal from the source access network node connected to the terminal or the terminal in a subscription notification or an active request manner.

Specifically, an implementation process of the subscription notification mode is as follows: the CPSF subscribes to the signal measurement report from the terminal or the source access network node, and the subscription request may be indicated as reporting when the periodic reporting or signal exceeds a certain threshold. The source access network node may report the same to the CPSF through the AMF.

Specifically, an implementation process of the active request manner is as follows: the CPSF sends the request information to the terminal or the source access network node, to request to obtain the real-time signal measurement report. The information reported by the UE or the source access network node to the CPSF includes one or more of the following: an identifier of an access network node currently connected to the terminal (for example, an NG-RAN node identifier) or a cell identifier (for example, a cell ID), location information of the terminal, a signal measurement report, or the like. The CPSF sends the reporting information to the AS, and the AS selects a suitable target NG-RAN or a target cell.

It should be noted that the foregoing B13 and B14 are mainly applicable to cases where the access network node connected to the terminal, the computing site, and the user plane function need to be changed.

Optionally, the specific implementation of sending the information to the target device based on the mobility control policy includes at least one of the following:
C11: sending the mobility control policy to a terminal for the terminal to select a first access network node;
optionally, when reselection of the computing site is performed, if the access network node needs to change, the terminal needs to select the first access network node based on the mobility control policy after receiving the mobility control policy.

Optionally, the terminal further needs to establish a session between the terminal and the first computing site based on the mobility control policy.

Further, the address of the first computing site in this case is obtained by at least one of the following manners:
C111, obtaining by using AS;
it may be understood that in this case, the address of the first computing site is sent by the AS to the terminal through the application layer.

C112, obtaining the mobility control policy sent from the first network function;
in other words, in this case, the mobility control policy sent by the first network function needs to include the identifier of the first computing site, and further, the terminal can determine the address of the first computing site based on the identifier of the first computing site.

C113, determining when re-discovery of the computing site is performed according to the mobility control policy sent by the first network function;
it should be noted that, when executing the computing site re-discovery process, the terminal needs to update the stored identifier of the old computing site with the discovered identifier of the new computing site, and in this case, the terminal may directly determine the address of the new computing site.

C12: sending the access network identifier in the mobility control policy to the second access network node, for the second access network node to determine the first access network node;
optionally, when reselection of the computing site is performed, if the access network node needs to change, then after receiving the access network identifier, the second access network node needs to determine the first access network node based on the access network identifier and establish an association with the first access network node.

C13: sending the first information in the mobility control policy to a third network function, for the third network function to select a first user plane function;
the first user plane function includes at least one of the following:
a local PDU session anchor user plane function;
a user plane function with an uplink classifier or a branch point function.

Specifically, the first information includes at least one of the following: a DNAI of the target data network, an identifier of the first user plane function, and an identifier of the first computing site.

It should be noted that, optionally, when reselection of the computing site is performed, if the access network node needs to change, the AMF may send the first information to the SMF, and the SMF performs the local PDU session anchor user plane function based on the first information, and/or performs a user plane function selection of an uplink classifier or a branch point function.

Optionally, in a case that the re-selection of the computing site is performed, if the access network node does not need to change, then after obtaining the computing power scheduling policy information, the AS may send the target computing site information to the terminal based on the computing power scheduling policy information, where the target computing site information includes at least one of the following: an identifier of the first computing site; and an identifier of the second computing site. After obtaining the target computing site information, the terminal executes a process of relocating a computing site or a computing site re-discovery process based on the target computing site information.

Further optionally, the process of relocating a computing site or the computing site re-discovery process implements at least one of the following: updating the address of the second computing site to the address of the first computing site; establishing a session to the first computing site.

Specifically, a specific implementation of the computing site re-discovery process is as follows: if the CPSF determines the IP address of the target computing site, the terminal determines and refreshes information of the second computing site based on the identifier of the first computing site or the identifier of the second computing site (for example, deletes the identifier of the second computing site), and establishes communication to the first computing site based on the identifier of the first computing site.

Specifically, a specific implementation of the process of relocating a computing site is: if the CPSF determines the UPF, the SMF directly determines the local PDU session anchor user plane function (and the user plane function with the uplink classifier or the branch point function) based on the local PDU session anchor user plane function (and the user plane function with the uplink classifier or the branch point function) indicated in the PCC rule. The terminal determines and refreshes information of the second computing site based on the identifier of the first computing site or the identifier of the second computing site (for example, deletes the identifier of the second computing site), and establishes communication to the first computing site based on the identifier of the first computing site.

Optionally, in another case, when reselection of the computing site is performed, if the access network node does not need to change or needs to change, the AS sends the computing power scheduling policy information to the second network function after obtaining the computing power scheduling policy information, and the second network function receives the computing power scheduling policy information sent by the AS, and determines the mobility control policy based on the computing power scheduling policy information.

Further, optionally, after the second network function determines the mobility control policy, in one case, the second network function obtains the mobility control policy and sends the mobility control policy to the first network function. In another case, the second network function obtains the mobility control policy and sends the mobility control policy to the third network function (that is, the SMF). Further optionally, after receiving the mobility control policy, the third network function needs to perform the process of relocating a computing site or the computing site re-discovery process according to the identifier of the first computing site to be connected to the terminal determined from the mobility control policy.

Specifically, the process of relocating a computing site performed by the SMF specifically includes: if the CPSF determines the UPF, the SMF directly determines the local PDU session anchor user plane function (and the user plane function with the uplink classifier or the branch point function) based on the local PDU session anchor user plane function (and the user plane function with the uplink classifier or the branch point function) indicated in the PCC rule.

Specifically, the computing site re-discovery process performed by the SMF specifically includes: if the CPSF determines the target computing site information, sending, by the SMF, the non-access stratum (NAS) message including the target computing site information (the identifier of the first computing site and/or the identifier of the second computing site) to the terminal through the AMF. The terminal determines and refreshes information of the second computing site based on the identifier of the first computing site or the identifier of the second computing site (for example, deletes the identifier of the second computing site), and establishes communication to the first computing site based on the identifier of the first computing site.

The following describes the application cases of the present application by using an example of the UE, the NG-RAN, and the 5GC.

### Application Case 1

The AS notifies or perceives that the current computing site is not applicable based on the location of the UE, reselects the computing site, and generates computing power scheduling policy information. The CPSF determines the mobility control policy, triggers the user plane path reconfiguration, and initiates the computing site relocation or re-discovery by the 5GC or the UE. In this case, the computing site and the UPF need to change, and the base station does not change.

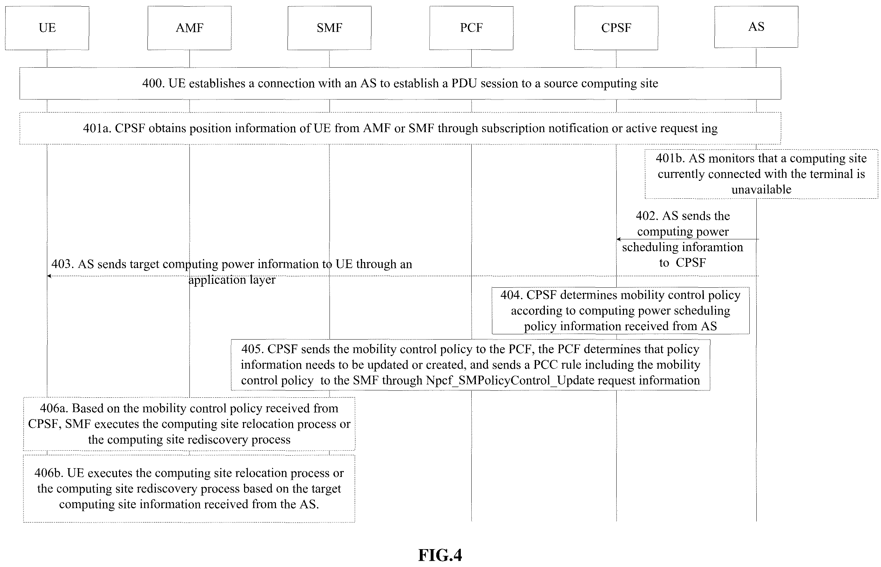

As shown in FIG. 4, a specific implementation process includes:
step 400: establishing, by the UE, a connection with the AS, and establishing a PDU session to the source computing site;
it should be noted that information about a suitable computing site (for example, an IP address of the computing site, and the computing site may be understood as a source computing site) is determined by using the application request AS.

Step 401a: the CPSF obtains the location information of the UE from the AMF or the SMF by using a subscription notification manner or an active request manner.

Subscription notification manner: the CPSF invokes Nsmf_EventExposure_Subscribe to subscribe to the location change event of the UE to the SMF or invokes Namf_EventExposure_Subscribe to subscribe to the location change event of the UE to the AMF; or the SMF or the AMF reports the location information of the UE (for example, whether the cell identifier (e.g. Cell ID) or the tracking area (TA) of the cell in which the terminal is currently located is located in the area of interest (Area of Interest)). The AMF sends the location information of the UE to the CPSF by invoking the Namf_EventExposure_Notify service operation, or the AMF calls the Namf_EventExposure_Notify to the SMF, and then the SMF sends the Nsmf_EventExposure_Notify to the CPSF.

Active request manner: the CPSF sends the request information to the SMF or the AMF to request the real-time location of the UE. The CPSF receives the location information of the UE sent by the SMF or the AMF, and sends the location information to the AS.

Step 401b: the AS monitors that the computing site currently connected to the terminal is not applicable (for example, the load of the computing site connected to the terminal is too large).

It should be noted that steps 401a and 401b are optional steps, usually only one is executed.

Step 402, sending, by the AS, computing power scheduling policy information to the CPSF;
specifically, the AS determines to obtain the computing power scheduling policy information based on the location information of the UE, the sensing network resource information (for example, the UPF load, the DNAI), the service supported by the computing site, the current load, and the like.

Step 403, the AS sends the target computing site information to the UE through the application layer.

It should be noted that the step 403 is optionally a step, and in a specific implementation, this step may not be performed.

Step 404: the CPSF determines the mobility control policy based on the computing power scheduling policy information received from the AS.

Step 405: the CPSF sends the mobility control policy to the PCF, the PCF determines that the policy information needs to be updated or created, and sends the PCC rule including the mobility control policy to the SMF through Npcf_SMPolicyControl_Update request information.

Step 406a: the SMF performs the process of relocating a computing site or the computing site re-discovery process based on the mobility control policy received from the CPSF.

It should be noted that if the above step 403 is not executed, this step 406a needs to be performed.

Specifically, if the SMF performs the process of relocating a computing site, if the CPSF determines the UPF, the SMF directly determines the local PDU session anchor user plane function (and the user plane function with the uplink classifier or the branch point function) based on the local PDU session anchor user plane function (and the user plane function with the uplink classifier or the branch point function) indicated in the PCC rule.

Specifically, if the SMF performs the computing site re-discovery process, and if the CPSF determines the target computing site information, then the SMF sends the NAS message including the target computing site information (for example, the new computing site IP address (that is, the target computing site), the old computing site IP address), and the FQDN (optional) to the UE through the AMF. The UE determines and refreshes information of the old computing site based on the identifier of the new computing site or the identifier of the old computing site (for example, deletes the IP address of the old computing site), and establishes communication to the new computing site based on the new computing site IP address.

Step 406b: the UE executes a process of relocating a computing site or a computing site re-discovery process based on target computing site information received from the AS;
it should be noted that if the above step 403 is executed, this step 406b needs to be performed, and at this time, step 406a is not performed.

Specifically, if the terminal executes the computing site re-discovery process, and if the CPSF determines the target computing site information, then the UE determines and refreshes information of the old computing site based on the identifier of the new computing site or the identifier of the old computing site (for example, deletes the IP address of the old computing site), and establishes communication to the new computing site based on the new computing site IP address.

Specifically, if the terminal performs the process of relocating a computing site, and if the CPSF determines the UPF, the SMF directly determines the local PDU session anchor user plane function (and the user plane function with the uplink classifier or the branch point function) based on the local PDU session anchor user plane function (and the user plane function with the uplink classifier or the branch point function) indicated in the PCC rule. The UE determines and refreshes information of the old computing site based on the identifier of the new computing site or the identifier of the old computing site (for example, deletes the IP address of the old computing site), and establishes communication to the new computing site based on the new computing site IP address.

### Application Case 2

The AS notifies or perceives that the current cell is not applicable, reselects a cell and a computing site based on the signal measurement report. The CPSF sends the information included in the mobility control policy to the SMF and the source NG-RAN through the AMF, and the source NG-RAN selects the target NG-RAN to trigger the cell handover process. In this case, the computing site, the base station, and the UPF all change.

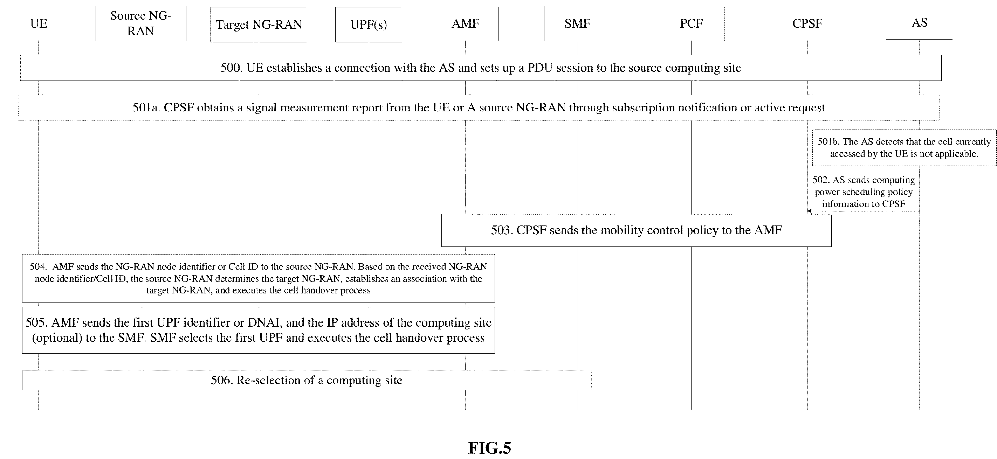

As shown in FIG. 5, a specific implementation process includes:
Step 500: the UE establishes a connection with the AS, and establishes a PDU session to the source computing site;
it should be noted that the application request AS determines the information of the appropriate computing site (the IP address of the computing site, and the computing site may be understood as a source computing site).

Step 501a: the CPSF obtains the signal measurement report from the UE or the source NG-RAN in a subscription notification manner or an active request manner.

Subscription notification manner: the CPSF subscribes the signal measurement report from the UE or the source NG-RAN, and the subscription request may be indicated as periodic reporting or reporting when the signal exceeds a certain threshold. The NG-RAN may report to the CPSF through the AMF.

Active request manner: the CPSF sends the request information to the UE or the source NG-RAN, to request to obtain the real-time signal measurement report. The information reported by the UE or the source NG-RAN to the CPSF includes one or more of the following: a current NG-RAN node identifier/Cell ID, location information of the UE, a signal measurement report, or the like. The CPSF sends the reporting information to the AS, and the AS selects a suitable target NG-RAN or a target cell.

Step 501b: the AS monitors that the cell currently accessed by the UE is not applicable (for example, satellite movement);
in this case, the AS needs to select a suitable target NG-RAN or a target cell.

It should be noted that steps 501a and 501b are optional steps, usually only one is executed.

Step 502, sending, by the AS, computing power scheduling policy information to the CPSF;
specifically, the AS generates the computing power scheduling policy information based on the signal measurement report, the sensing network resource information (for example, the UPF load, the DNAI), the service supported by the computing site, and the current load.

Step 503: the CPSF sends the mobility control policy to the AMF;
specifically, the CPSF determines the mobility control policy based on the computing power scheduling policy information received from the AS; the CPSF sends the mobility control policy to the PCF, and the PCF invokes the Namf_Communication_N1N2 MessageTransfer service operation to send the mobility control policy to the AMF. Alternatively, the CPSF directly sends the mobility control policy to the AMF.

Step 504: the AMF sends the NG-RAN node identifier or the cell ID to the source NG-RAN. The source NG-RAN determines the target NG-RAN based on the received NG-RAN node identifier/Cell ID, establishes an association with the target NG-RAN, and performs a cell handover process.

Step 505: the AMF identifies the first UPF (for example, a local PDU session anchor user plane function (L-PSA UPF) identifier, a user plane function (ULCL/BP UPF) identifier with an uplink classifier or a branch point function) or a DNAI, and an IP address (optional) of the computing site is sent to the SMF. The SMF selects the first UPF, and performs a cell handover process.

step 506, re-selecting the computing site;
it should be noted that the re-selection of the computing site is same as the step 403, the step 406a, and the step 406b of the application case 1.

### Application Case 3

The AS notifies or perceives, based on the signal measurement report, that the current cell is not applicable, reselects the cell and the computing site. The CPSF sends the mobility control policy to the UE through the UE policy, and the UE selects the target NG-RAN to establish the session to the target computing site. In this case, the computing site, the base station, and the UPF all change.

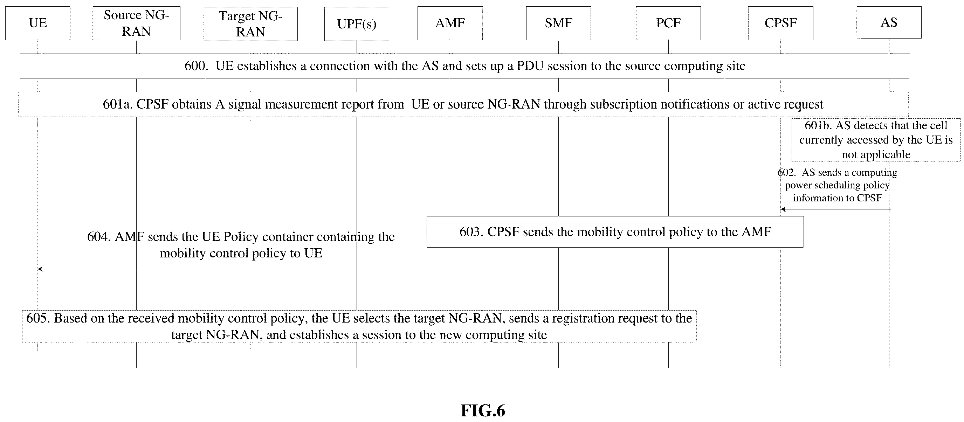

As shown in FIG. 6, a specific implementation process includes:
step 600: establishing, by the UE, a connection with the AS, and establishing a PDU session to the source computing site;
it should be noted that the application request AS determines the information of the appropriate computing site (the IP address of the computing site).

Step 601a: the CPSF obtains the signal measurement report from the UE or the source NG-RAN in a subscription notification manner or an active request manner.

Subscription notification manner: the CPSF subscribes the signal measurement report from the UE or the source NG-RAN, and the subscription request may be indicated as periodic reporting or reporting when the signal exceeds a certain threshold. The NG-RAN may report to the CPSF through the AMF.

Active request manner: the CPSF sends the request information to the UE or the source NG-RAN, to request to obtain the real-time signal measurement report. The information reported by the UE or the source NG-RAN to the CPSF includes one or more of the following: a current NG-RAN node identifier/Cell ID, location information of the UE, a signal measurement report, or the like. The CPSF sends the reporting information to the AS, and the AS selects a suitable target NG-RAN or a target cell.

Step 601b: the AS monitors that the cell currently accessed by the UE is not applicable (for example, satellite movement);
in this case, the AS needs to select a suitable target NG-RAN or a target cell.

It should be noted that steps 601a and 601b are optional steps, usually only one is executed.

Step 602, sending, by the AS, computing power scheduling policy information to the CPSF;
specifically, the AS generates the computing power scheduling policy based on the signal measurement report, the sensing network resource information (for example, the UPF load, the DNAI), the service supported by the computing site, and the current load.
step 603: the CPSF sends the mobility control policy to the AMF;
specifically, the CPSF determines the mobility control policy based on the computing power scheduling policy information received from the AS; the CPSF sends the mobility control policy to the PCF, and the PCF invokes the Namf_Communication_N1N2 MessageTransfer service operation to send the mobility control policy to the AMF.

Step 604: the AMF sends the UE Policy container containing the mobility control policy to the UE.

Step 605: the UE selects the target NG-RAN based on the received mobility control policy, and sends a registration request to the target NG-RAN, and establishes a session to the new computing site.

It should be noted that the IP address acquisition manner of the new computing site is one of the following: 1) the AS provides to the UE through the application layer; 2) the AS provides to the UE in the UE policy; and 3) obtaining when the UE refreshes the address of the old computing site according to the information provided in the UE policy (for example, the FQDN, the computing site re-discovery indication), and triggers the computing site re-discovery process.

Embodiments of the present application provide a method for supporting computing site reselection, to implement cloud-edge collaboration based on a 5G system in combination with a computing power network, to reselect an edge computing site that meets a computing power requirement.

The technical solutions provided in the embodiments of the present application may be applied to a plurality of systems, in particular, a 5G system. For example, the applicable system may be a global system of mobile communications (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunications system (UMTS), a worldwide interoperability for microwave access (WiMAX) system, a 5G new radio (NR) system, and the like. The plurality of systems each include a terminal device and a network device. The system may further include a core network portion, such as an evolved packet system (EPS), a 5G system (5GS), or the like.

The terminal in this embodiment of the present application is also referred to as a terminal device, and may be a device that provides voice and/or data connectivity to a user, a handheld device having a wireless connection function, or another processing device connected to a wireless modem. In different systems, names of terminal devices may also be different, for example, in a 5G system, the terminal device may be referred to as user equipment (User Equipment, UE). The wireless terminal device may communicate with one or more core networks (CN) through a radio access network (RAN), and the wireless terminal device may be a mobile terminal device, such as a mobile phone (or referred to as a "cellular" phone) and a computer having a mobile terminal device, for example, may be a portable, pocket-sized, handheld, computer built-in or vehicle-mounted mobile device, and they exchange language and/or data with a radio access network. For example, a device such as a personal communication service (PCS) phone, a cordless phone, a session initiation protocol (SIP) phone, a wireless local loop (WLL) station, or a personal digital assistant (PDA). The wireless terminal device may also be referred to as a system, a subscriber unit, a subscriber station, a mobile station, a mobile, a remote station, an access point, a remote terminal, an access terminal, a user terminal, a user agent, and a user device, which is not limited in the embodiments of the present application.

The access network node in this embodiment of the present application may be a base station, and the base station may include a plurality of cells serving a terminal. According to different specific application occasions, the base station may also be referred to as an access point, or may be a device in an access network that communicates with a wireless terminal device through one or more sectors on an air interface, or another name. The network device may be configured to exchange the received over-the-air frame with an Internet Protocol (IP) packet as a router between the wireless terminal device and the rest of the access network, where the rest of the access network may include an Internet Protocol (IP) communication network. The network device may also coordinate attribute management of the air interface. For example, the network device in this embodiment of the present application may be a base transceiver station (BTS) in a global system for mobile communications (GSM) or a code division multiple access (CDMA), or may be a network device (NodeB) in a wide-band code division multiple access (WCDMA), or may be an evolved network device (evolutional Node B, eNB, or an e-NodeB) in a long term evolution (LTE) system, a 5G base station (gNB) in a next generation system, or a home evolved NodeB (HeNB), a relay node, a home base station (femto), a pico base station, or the like, which is not limited in this embodiment of the present application. In some network structures, the network device may include a central unit (CU) node and a distributed unit (DU) node, and the centralized unit and the distributed unit may also be geographically separated.

The access network node and the terminal device may each use one or more antennas to perform multi-input multi-output (MIMO) transmission, and the MIMO transmission may be single-user MIMO (SU-MIMO) or multi-user MIMO (MU-MIMO). According to the form and quantity of the root antenna combination, the MIMO transmission may be a two-dimensional MIMO antenna (2D-MIMO), a three-dimensional MIMO antenna (3D-MIMO), a full dimension MIMO antenna (Full Dimension, FD-MIMO), or a massive MIMO antenna (massive-MIMO), or may be diversity transmission or precoding transmission or beamforming transmission.

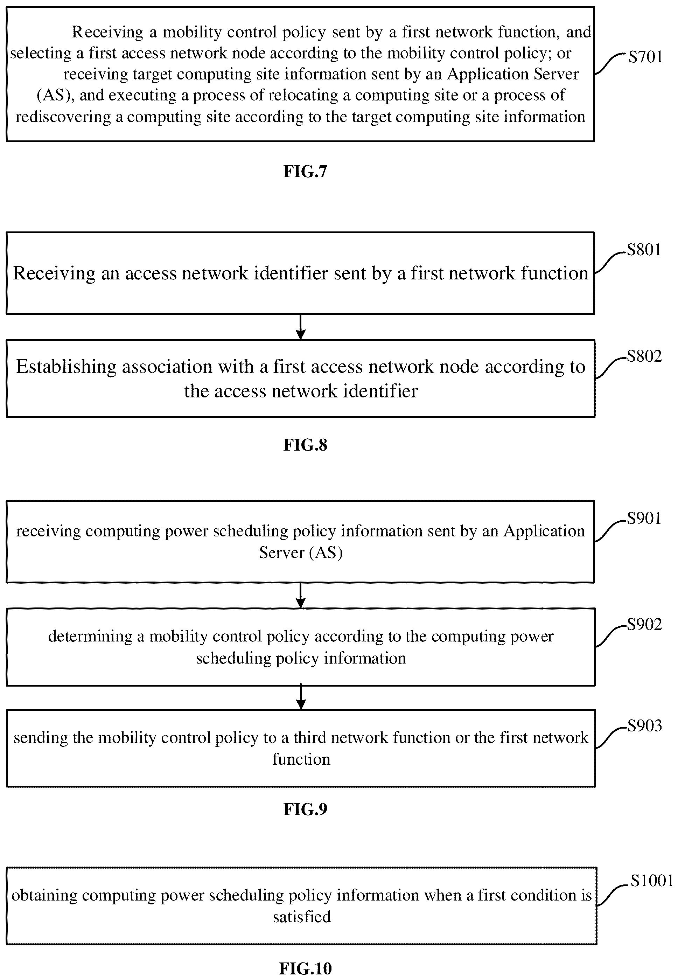

As shown in FIG. 7, an embodiment of the present application provides an information processing method performed by a terminal, including:
step S701, receiving a mobility control policy sent by a first network function, and selecting a first access network node according to the mobility control policy; or receiving target computing site information sent by an Application Server AS, and executing a process of relocating a computing site or a computing site re-discovery process according to the target computing site information.

Optionally, the target computing site information includes at least one of the following: an identifier of a first computing site, where the first computing site is a computing site connected to a terminal after selection of the computing site is performed; an identifier of the second computing site, where the second computing site is a computing site connected to the computing site before selection the computing site is performed.

Optionally, the process of relocating a computing site or the computing site re-discovery process implements at least one of the following: updating the address of the second computing site to the address of the first computing site; establishing a session to the first computing site.

Optionally, the method further includes: establishing a session between the terminal and the first computing site according to the mobility control policy.

Optionally, the address of the first computing site is obtained by at least one of the following manners: obtaining by an Application Server AS; obtaining the mobility control policy sent by the first network function; or determining the computing site re-discovery according to the mobility control policy sent by the first network function.

It should be noted that all descriptions about the terminal side in the foregoing embodiments are applicable to the information processing method embodiment applied to the terminal side, and the same technical effect can also be achieved, and details are not described herein again.

As shown in FIG. 8, an embodiment of the present application provides an information processing method, performed by a second access network node, including: step S801, receiving an access network identifier sent by a first network function; step S802: establishing an association with the first access network node according to the access network identifier.

It should be noted that all descriptions about the second access network node side in the foregoing embodiments are applicable to the information processing method embodiment applied to the second access network node side, and the same technical effect can also be achieved, and details are not described herein again.

As shown in FIG. 9, an embodiment of the present application provides an information processing method, performed by a second network function, including:
step S901, receiving computing power scheduling policy information sent by the Application Server AS;
step S902, determining a mobility control policy according to the computing power scheduling policy information;
step S903: sending the mobility control policy to a third network function or a first network function.

Optionally, the computing power scheduling policy information is obtained when the Application Server AS satisfies a first condition. The first condition includes one of the following: receiving location information of a terminal sent by a second network function; monitoring that the second computing site is not applicable to the terminal, and the second computing site is a computing site connected to the terminal before the selection of the computing site is performed; monitoring that a cell accessed by the terminal does not meet a connection requirement of the terminal; and receiving a signal measurement report of the terminal sent by the second network function.

Optionally, the method further includes: receiving location information of a terminal sent by a first network function or a third network function; sending the location information of the terminal to the Application Server AS.

Optionally, the method further includes: sending a subscription notification of the location change event of the terminal to the first network function or the third network function; or sending the terminal location request information to the first network function or the third network function.

Optionally, the method further includes: receiving a signal measurement report of a terminal sent by a terminal or a second access network node; sending the signal measurement report of the terminal to the Application Server AS.

Optionally, the method further includes: sending a subscription notification of the signal measurement report to the terminal or the second access network node; or sending the signal measurement report request information to the terminal or the second access network node.

It should be noted that all descriptions about the second network function side in the foregoing embodiment are applicable to the information processing method embodiment applied to the second network function side, and the same technical effect can also be achieved, and details are not described herein again.

As shown in FIG. 10, an embodiment of the present application provides an information processing method, performed by an Application Server AS, including:
step S 1001, in a case that a first condition is met, obtaining computing power scheduling policy information; wherein the first condition includes one of the following: receiving location information of a terminal sent by a second network function; monitoring that the second computing site is not applicable to the terminal, and the second computing site is a computing site connected to the terminal before selection of the computing site is performed; monitoring that a cell accessed by the terminal does not meet a connection requirement of the terminal; and receiving a signal measurement report of the terminal sent by the second network function.

Optionally, the method further includes: sending the target computing site information to the terminal according to the computing power scheduling policy information.

Optionally, the target computing site information includes at least one of the following: an identifier of a first computing site, where the first computing site is a computing site connected to a terminal after selection of the computing site is performed; an identifier of the second computing site.

Optionally, the method further includes: sending the computing power scheduling policy information to a second network function, where the computing power scheduling policy information is used by the second network function to determine a mobility control policy.

Optionally, before the obtaining computing power scheduling policy information, the method further includes: determining an access network identifier.

It should be noted that all descriptions about the Application Server AS side of in the foregoing embodiments are applicable to the information processing method embodiment applied to the Application Server AS side, and the same technical effect can also be achieved, and details are not described herein again.

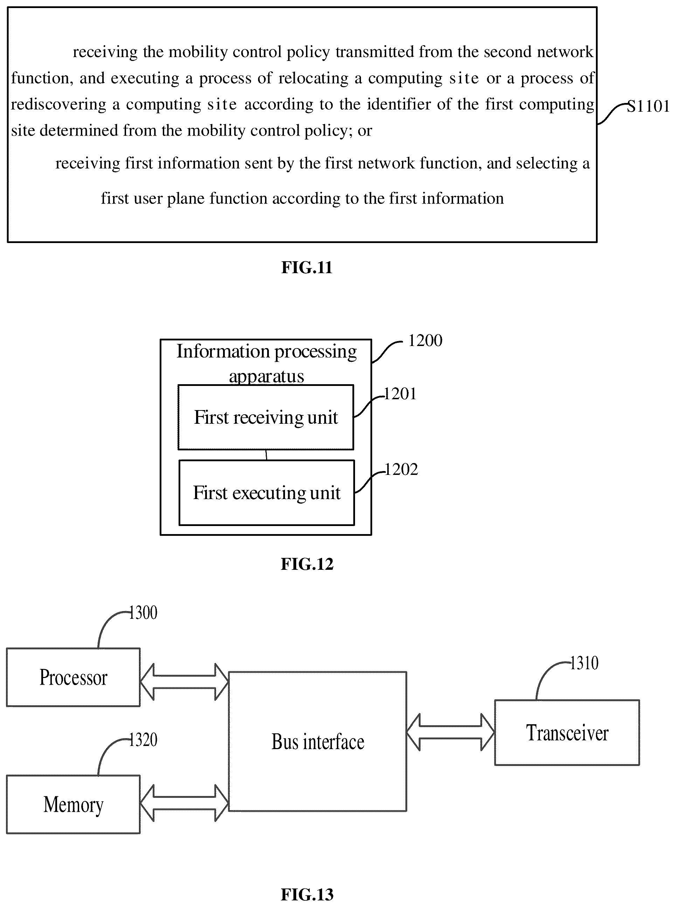

As shown in FIG. 11, an embodiment of the present application provides an information processing method, performed by a third network function, including:
step S1101, receiving a mobility control policy transmitted from a second network function, and executing a process of relocating a computing site or a computing site re-discovery process according to the identifier of the first computing site determined from the mobility control policy; or
receiving first information sent by a first network function, and selecting a first user plane function based on the first information; and the first user plane function includes at least one of the following: a local protocol data unit (PDU) session anchor user plane function; a user plane function with an uplink classifier or a branch point function;
the first information includes at least one of the following: a data network access identifier (DNAI) of a target data network; an identifier of a first user plane function; an identifier of the first computing site, where the first computing site is a computing site connected to the terminal after selection of the computing site is performed.

It should be noted that all descriptions about the third network function side in the foregoing embodiments are applicable to the information processing method embodiment applied to the third network function side, and the same technical effect can also be achieved, and details are not described herein again.

As shown in FIG. 12, an embodiment of the present application provides an information processing apparatus 1200, applied to a first network function, including:
a first receiving unit 1201, configured to receive a mobility control policy sent by a second network function;
a first execution unit 1202, configured to send information to the target device according to the mobility control policy, so that the target device executes the process of selecting a computing site.

Optionally, the first execution unit 1202 is configured to implement at least one of the following: sending the mobility control policy to a terminal, where the mobility control policy is used by the terminal to select a first access network node; sending an access network identifier in the mobility control policy to a second access network node, where the access network identifier is used by the second access network node to determine a first access network node; and sending first information in the mobility control policy to a third network function, so that the third network function selects a first user plane function, where the first information includes at least one of the following: a data network access identifier (DNAI) of a target data network, an identifier of a first user plane function, and an identifier of a first computing site; and the first computing site is a computing site connected to the terminal after selection of the computing site is performed;
the first user plane function includes at least one of the following: a local protocol data unit (PDU) session anchor user plane function; user plane function with uplink classifier or branch point function.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

As shown in FIG. 13, an embodiment of the present application further provides a communication device, where the communication device is a first network function, and includes a processor 1300, a transceiver 1310, a memory 1320, and a program stored on the memory 1320 and capable of running on the processor 1300, where the transceiver 1310 is connected to the processor 1300 and the memory 1320 through a bus interface, and the processor 1300 is configured to read a program in the memory and perform the following processes: receiving a mobility control policy sent by a second network function; sending information to the target device based on the mobility control policy, where the information is used by the target device to execute the process of selecting the computing site.

The transceiver 1310 is configured to receive and transmit data under the control of the processor 1300.

**In** FIG. 13, the bus architecture may include any number of interconnected buses and bridges, and in particular, various circuits of the memory represented by the processor 1300 and the memory represented by the memory 1320 are linked together. The bus architecture may also link various other circuits, such as a peripheral device, a voltage regulator, and a power management circuit, which are well known in the art, and therefore will not be further described herein. The bus interface provides an interface. The transceiver 1310 may be a plurality of elements, i.e. including a transmitter and a receiver, providing means for communicating with various other devices on a transmission medium, the transmission media including transmission media including wireless channels, wired channels, optical cables, etc.

The processor 1300 is responsible for managing the bus architecture and the usual processing, and the memory 1320 may store data used by the processor 1300 when performing the operation.

Optionally, the processor 1300 may be a central processing unit (CPU), an application-specific integrated circuit (ASIC), a field-programmable gate array (FPGA), or a complex programmable logic device (CPLD), and the processor may also adopt a multi-core architecture.

The processor invokes the computer program stored in the memory to perform any one of the methods provided in the embodiments of the present application according to the obtained executable instructions. The processor and the memory may also be physically separated.

Optionally, the processor is configured to read a computer program in the memory and perform at least one of the following operations:
sending the mobility control policy to a terminal, where the mobility control policy is used by the terminal to select a first access network node; sending an access network identifier in the mobility control policy to a second access network node, where the access network identifier is used by the second access network node to determine a first access network node; and sending first information in the mobility control policy to a third network function, for the third network function to select a first user plane function, where the first information includes at least one of the following: a data network access identifier (DNAI) of a target data network, an identifier of a first user plane function, and an identifier of a first computing site; and the first computing site is a computing site connected to the terminal after selection of the computing site is performed; the first user plane function includes at least one of the following: a local protocol data unit (PDU) session anchor user plane function; user plane function with uplink classifier or branch point function.

At least one embodiment of the present application further provides a communication device, where the communication device is a first network function, and includes a memory, a processor, and a computer program stored in the memory and executable on the processor. When the processor executes the program, each process in the information processing method embodiment is implemented, and the same technical effect can be achieved, to avoid repetition, and details are not described herein again.

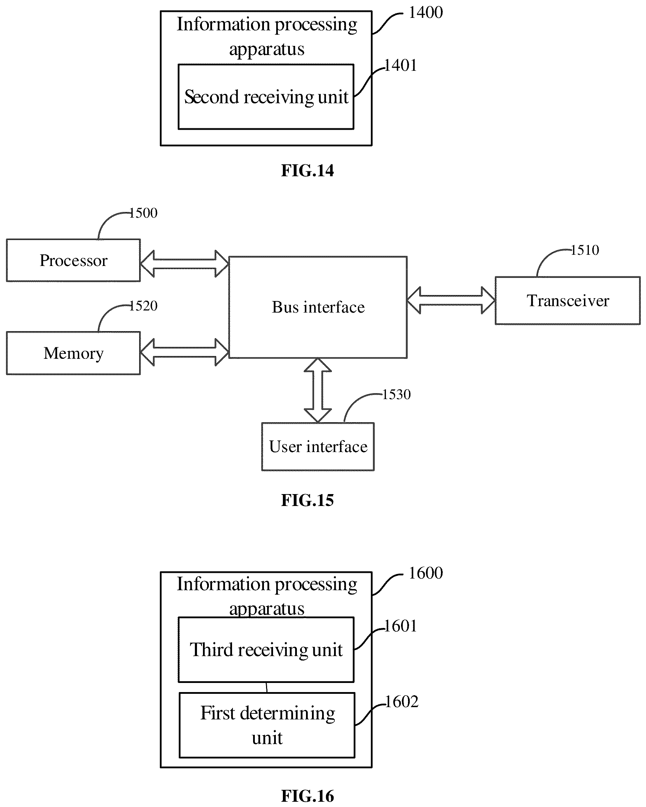

As shown in FIG. 14, an embodiment of the present application provides an information processing apparatus 1400, applied to a terminal and including: a second receiving unit 1401, configured to receive a mobility control policy sent by a first network function, and select a first access network node according to the mobility control policy; or receive target computing site information sent by an Application Server AS, and execute a process of relocating a computing site or a computing site re-discovery process according to the target computing site information.

Optionally, the target computing site information includes at least one of the following: an identifier of a first computing site, where the first computing site is a computing site connected to a terminal after selection of the computing site is performed; an identifier of the second computing site, where the second computing site is a computing site connected to the terminal before the selection of computing site is performed.

Optionally, the process of relocating a computing site or the computing site re-discovery process implements at least one of the following: updating the address of the second computing site to the address of the first computing site; establishing a session to the first computing site.

Optionally, in a case that the mobility control policy sent by the first network function is received, the apparatus further includes: an establishing unit, configured to establish a session between the terminal and the first computing site according to the mobility control policy.

Optionally, the address of the first computing site is obtained by at least one of the following manners: obtaining by an Application Server AS; obtaining the mobility control policy sent by the first network function; or determining the computing site re-discovery according to the mobility control policy sent by the first network function.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

As shown in FIG. 15, an embodiment of the present application further provides a communication device, where the communication device is a terminal, and includes a processor 1500, a transceiver 1510, a memory 1520, and a program stored on the memory 1520 and capable of running on the processor 1500, where the transceiver 1510 is connected to the processor 1500 and the memory 1520 through a bus interface, and the processor 1500 is configured to read a program in the memory and perform the following processes:
receiving a mobility control policy sent by a first network function, and selecting a first access network node according to the mobility control policy; or receiving target computing site information sent by an Application Server AS, and executing a process of relocating a computing site or a computing site re-discovery process according to the target computing site information.

The transceiver 1510 is for receiving and transmitting data under the control of the processor 1500.

In FIG. 15, the bus architecture may include any number of interconnected buses and bridges, and specifically, the one or more processors represented by the processor 1500 and various circuits of the memory represented by the memory 1520 are linked together. The bus architecture may also link various other circuits, such as a peripheral device, a voltage regulator, and a power management circuit, which are well known in the art, and therefore will not be further described herein. The bus interface provides an interface. The transceiver 1510 may be a plurality of elements, i.e. including a transmitter and a receiver, providing means for communicating with various other devices on a transmission medium, the transmission media including transmission media including wireless channels, wired channels, optical cables, etc. For different user devices, the user interface may alternatively be an interface that can be externally connected to a required device, and the connected device includes, but is not limited to, a keypad, a display, a speaker, a microphone, a joystick, and the like.

The processor 1500 is responsible for managing the bus architecture and the usual processing, and the memory 1520 may store the data used by the processor 1500 in performing the operation.

Optionally, the processor 1500 may be a central processing unit (CPU), an application-specific integrated circuit (ASIC), a field-programmable gate array (FPGA) or a complex programmable logic device (CPLD), and the processor may also adopt a multi-core architecture.

The processor invokes the computer program stored in the memory to perform any one of the methods provided in the embodiments of the present application according to the obtained executable instructions. The processor and the memory may also be physically separated.

Optionally, the target computing site information includes at least one of the following: an identifier of a first computing site, where the first computing site is a computing site connected to a terminal after selection of the computing site is performed; an identifier of the second computing site, where the second computing site is a computing site connected to the terminal before the selection of the computing site is performed.

Optionally, the process of relocating a computing site or the computing site re-discovery process implements at least one of the following: updating the address of the second computing site to the address of the first computing site; establishing a session to the first computing site.

Optionally, in a case that the mobility control policy sent by the first network function is received, the processor is configured to read the computer program in the memory to further perform the following operations: establishing a session between the terminal and the first computing site according to the mobility control policy.

Optionally, the address of the first computing site is obtained by at least one of the following manners: obtaining by an Application Server AS; obtaining the mobility control policy sent by the first network function; or determining when performing the computing site re-discovery according to the mobility control policy sent by the first network function.

At least one embodiment of the present application further provides a communication device, where the communication device is a terminal, and includes a memory, a processor, and a computer program stored in the memory and executable on the processor. When the processor executes the program, each process in the information processing method embodiment is implemented, and the same technical effect can be achieved, to avoid repetition, and details are not described herein again.

As shown in FIG. 16, an embodiment of the present application provides an information processing apparatus 1600, applied to a second access network node, including: a third receiving unit 1601, configured to receive the access network identifier sent by the first network function; and a first determination unit 1602 configured to establish an association with the first access network node according to the access network identifier.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

An embodiment of the present application further provides a communication device, where the communication device is a second access network node, and a structure of the second access network node may be shown in FIG. 13, and details are not described herein again.

The processor is configured to read a program in a memory, and perform the following processes: receiving an access network identifier sent by a first network function; establishing an association with the first access network node based on the access network identifier.

At least one embodiment of the present application further provides a communication device, where the communication device is a second access network node, and includes a memory, a processor, and a computer program stored in the memory and executable on the processor. When the processor executes the program, each process in the information processing method embodiment is implemented, and the same technical effect can be achieved, to avoid repetition, and details are not described herein again.

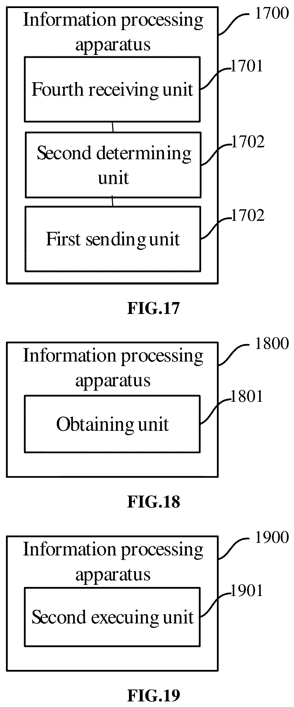

As shown in FIG. 17, an embodiment of the present application provides an information processing apparatus 1700, applied to a second network function, including: a fourth receiving unit 1701, configured to receive computing power scheduling policy information sent by the Application Server AS; a second determination unit 1702, configured to determine a mobility control policy according to the computing power scheduling policy information; and a first sending unit 1703, configured to send the mobility control policy to a third network function or a first network function.

Optionally, the computing power scheduling policy information is obtained when the Application Server AS satisfies a first condition; the first condition includes one of the following: receiving location information of a terminal sent by a second network function; monitoring that the second computing site is not applicable to the terminal, and the second computing site is a computing site connected to the terminal before the selection of the computing site is performed; monitoring that a cell accessed by the terminal does not meet a connection requirement of the terminal; and receiving a signal measurement report of the terminal sent by the second network function.

Optionally, the apparatus further includes: a fifth receiving unit, configured to receive the location information of the terminal sent by the first network function or the third network function; and a second sending unit, configured to send the location information of the terminal to the Application Server AS.

Optionally, the apparatus further includes: a third sending unit, configured to send a subscription notification of a location change event of the terminal to the first network function or the third network function; or sending the terminal location request information to the first network function or the third network function.

Optionally, the apparatus further includes: a sixth receiving unit, configured to receive a signal measurement report of a terminal sent by a terminal or a second access network node; a fourth sending unit, configured to send the signal measurement report of the terminal to the Application Server AS.

Optionally, the apparatus further includes: a fifth sending unit, configured to send a subscription notification of the signal measurement report to the terminal or the second access network node; or sending the signal measurement report request information to the terminal or the second access network node.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

An embodiment of the present application further provides a communication device, where the communication device is a second network function, and a structure of the second network function may be shown in FIG. 13, and details are not described herein again.

The processor is configured to read a program in a memory, and perform the following processes: receiving computing power scheduling policy information sent by an Application Server AS; determining a mobility control policy according to the computing power scheduling policy information; and sending the mobility control policy to a third network function or a first network function.

Optionally, the computing power scheduling policy information is obtained when the Application Server AS satisfies a first condition. The first condition includes one of the following: receiving location information of a terminal sent by a second network function; monitoring that the second computing site is not applicable to the terminal, and the second computing site is a computing site connected to the terminal before the selection of the computing site is performed; monitoring that a cell accessed by the terminal does not meet a connection requirement of the terminal; and receiving a signal measurement report of the terminal sent by the second network function.

Optionally, the processor is configured to read the computer program in the memory to further perform the following operations: receiving location information of a terminal sent by a first network function or a third network function; sending the location information of the terminal to the Application Server AS.

Optionally, the processor is configured to read the computer program in the memory to further perform the following operations: sending a subscription notification of the location change event of the terminal to the first network function or the third network function; or sending the terminal location request information to the first network function or the third network function.

Optionally, the processor is configured to read the computer program in the memory to further perform the following operations: receiving a signal measurement report of a terminal sent by a terminal or a second access network node; sending the signal measurement report of the terminal to the Application Server AS.

Optionally, the processor is configured to read the computer program in the memory to further perform the following operations: sending a subscription notification of the signal measurement report to the terminal or the second access network node; or sending the signal measurement report request information to the terminal or the second access network node.

At least one embodiment of the present application further provides a communication device, where the communication device is a second network function, and includes a memory, a processor, and a computer program stored in the memory and executable on the processor. When the processor executes the program, each process in the information processing method embodiment is implemented, and the same technical effect can be achieved, to avoid repetition, and details are not described herein again.

As shown in FIG. 18, an embodiment of the present application provides an information processing apparatus 1800, applied to an Application Server AS, including: an obtaining unit 1801, configured to obtain computing power scheduling policy information in a case that a first condition is met. The first condition includes one of the following: receiving location information of a terminal sent by a second network function; monitoring that the second computing site is not applicable to the terminal, and the second computing site is a computing site connected to the terminal before the selection of the computing site is performed; monitoring that a cell accessed by the terminal does not meet a connection requirement of the terminal; and receiving a signal measurement report of the terminal sent by the second network function.

Optionally, the apparatus further includes: a sixth sending unit, configured to send the target computing site information to the terminal according to the computing power scheduling policy information.

Optionally, the target computing site information includes at least one of the following: an identifier of a first computing site, where the first computing site is a computing site connected to a terminal after selection of the computing site is performed; an identifier of the second computing site.

Optionally, the apparatus further includes: a seventh sending unit, configured to send the computing power scheduling policy information to a second network function, where the seventh sending unit is configured to determine a mobility control policy for the second network function.

Optionally, before obtaining the computing power scheduling policy information by the obtaining unit 1801, the apparatus further includes: a third determination unit, configured to determine the access network identifier.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

An embodiment of the present application further provides a communication device, where the communication device is an Application Server, and a structure of the Application Server may be shown in FIG. 13, and details are not described herein again.

The processor is configured to read a program in a memory, and perform the following processes: obtaining computing power scheduling policy information in a case that a first condition is met. The first condition includes one of the following: receiving location information of a terminal sent by a second network function; monitoring that the second computing site is not applicable to the terminal, and the second computing site is a computing site connected to the terminal before the selection of the computing site is performed; monitoring that a cell accessed by the terminal does not meet a connection requirement of the terminal; and receiving a signal measurement report of the terminal sent by the second network function.

Optionally, the processor is configured to read the computer program in the memory to further perform the following operations: sending the target computing site information to the terminal according to the computing power scheduling policy information.

Optionally, the target computing site information includes at least one of the following: an identifier of a first computing site, where the first computing site is a computing site connected to a terminal after selection of the computing site is performed; an identifier of the second computing site.

Optionally, the processor is configured to read the computer program in the memory to further perform the following operations: sending the computing power scheduling policy information to a second network function, where the computing power scheduling policy information is used by the second network function to determine a mobility control policy.

Optionally, the processor is configured to read the computer program in the memory to further perform the following operations: determining an access network identifier.

At least one embodiment of the present application further provides a communication device, where the communication device is an Application Server AS, and includes a memory, a processor, and a computer program stored in the memory and executable on the processor. When the processor executes the program, each process in the information processing method embodiment is implemented, and the same technical effect can be achieved, to avoid repetition, and details are not described herein again.

As shown in FIG. 19, an embodiment of the present application provides an information processing apparatus 1900, applied to a third network function, including: a second execution unit 1901, configured to receive a mobility control policy transmitted from a second network function, and perform a process of relocating a computing site or a computing site re-discovery process according to the identifier of the first computing site determined from the mobility control policy; or receiving first information sent by a first network function, and selecting a first user plane function based on the first information; and the first user plane function includes at least one of the following: a local protocol data unit (PDU) session anchor user plane function; a user plane function with an uplink classifier or a branch point function; the first information includes at least one of the following: a data network access identifier (DNAI) of a target data network; an identifier of a first user plane function; an identifier of the first computing site, where the first computing site is a computing site connected to the terminal after selection of the computing site is performed.

It should be noted that, the division of the units in the embodiments of the present application is schematic and is merely logical function division, and there may be another division manner during actual implementation. In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a processor-readable storage medium. Based on this understanding, the technical solution of the present application essentially or the part contributing to the related art or all or part of the technical solution may be embodied in the form of a software product. The computer software product is stored in a storage medium, and comprises several instructions for enabling a computer device (which may be a personal computer, a server, or a network device, etc.) or a processor to execute all or part of the steps of the method described in the embodiments of the present application. The foregoing storage medium includes various media that can store program code, such as a USB flash drive, a removable hard disk, a read-only memory (ROM), a random access memory (RAM), a magnetic disk, or an optical disk.

An embodiment of the present application further provides a communication device, where the communication device is a third network function, and a structure of the third network function may be shown in FIG. 13, and details are not described herein again.

The processor is configured to read a program in a memory, and perform the following processes:
receiving a mobility control policy transmitted from a second network function, and executing a process of relocating a computing site or a computing site re-discovery process according to the identifier of the first computing site determined from the mobility control policy; or
receiving first information sent by a first network function, and selecting a first user plane function based on the first information; and
the first user plane function includes at least one of the following:
   a local protocol data unit (PDU) session anchor user plane function;
   a user plane function with an uplink classifier or a branch point function;
   the first information includes at least one of the following:
      a data network access identifier (DNAI) of a target data network;
      an identifier of a first user plane function;
      an identifier of the first computing site, where the first computing site is a computing site connected to the terminal after selection of the computing site is performed.

At least one embodiment of the present application further provides a communication device, where the communication device is a third network function, and includes a memory, a processor, and a computer program stored in the memory and executable on the processor. When the processor executes the program, each process in the information processing method embodiment is implemented, and the same technical effect can be achieved, to avoid repetition, and details are not described herein again.

At least one embodiment of the present application further provides a computer-readable storage medium, on which a computer program is stored, and when the program is executed by a processor, various processes in the foregoing information processing method embodiments are implemented, and the same technical effect can be achieved, to avoid repetition, and details are not described herein again. The computer-readable storage medium is, for example, a read-only memory (ROM), a random access memory (RAM), a magnetic disk, an optical disk, or the like.

A person skilled in the art should understand that the embodiments of the present application may be provided as a method, a system, or a computer program product. Therefore, the present disclosure may take the form of an entirely hardware embodiment, an entirely software embodiment, or an embodiment combining software and hardware aspects. Moreover, the present application may use a form of a computer program product implemented on one or more computer-usable storage media (including but not limited to a disk memory and an optical memory) that include computer-usable program code.

The present application is described with reference to the flowcharts and/or block diagrams of the method, the device (system), and the computer program product according to the embodiments of the present application. It should be understood that each flow and/or block in the flowcharts and/or block diagrams, and combinations of flows and/or blocks in the flowcharts and/or block diagrams may be implemented by computer-executable instructions. These computer-executable instructions may be provided to a processor of a general-purpose computer, a special-purpose computer, an embedded processor, or other programmable data processing devices to generate a machine, so that the instructions executed by the processor of the computer or other programmable data processing device generate an apparatus for implementing the functions specified in one or more processes in the flowcharts and/or one or more blocks in the block diagrams.

These processor-executable instructions may also be stored in a processor-readable memory that can direct a computer or other programmable data processing devices to work in a specific manner, so that the instructions stored in the processor-readable memory generate an article of manufacture including an instruction apparatus, and the instruction apparatus implements functions specified in one or more processes in the flowcharts and/or one or more blocks in the block diagrams.

These processor-executable instructions may also be loaded onto a computer or other programmable data processing apparatus to cause a series of operational steps to be performed on the computer or other programmable apparatus to produce a computer-implemented process, such that the instructions which execute on the computer or other programmable apparatus provide steps for implementing the functions specified in one or more processes in the flowcharts and/or one or more blocks in the block diagrams.

Obviously, those skilled in the art can make various modifications and variations to the present application without departing from the spirit and scope of the present application. The present application is intended to cover these modifications and variations provided that they fall within the scope of protection defined by the following claims and their equivalent technologies.

## Claims

1. An information processing method, executed by a first network function, the method comprising:
receiving a mobility control policy sent by a second network function;
sending information to a target device according to the mobility control policy, wherein the information is used by the target device to execute a process of selecting a computing site.

2. The method according to claim 1, wherein the sending information to a target device according to the mobility control policy comprises at least one of the following:
sending the mobility control policy to a terminal, the mobility control policy being used by the terminal to select a first access network node;
sending an access network identifier in the mobility control policy to a second access network node, the access network identifier being used by the second access network node to determine the first access network node;
sending first information in the mobility control policy to a third network function, the first information being used by the third network function to select a first user plane function; the first information comprises at least one of the following: a Data Network Access Identifier (DNAI) of a target data network, an identifier of the first user plane function, an identifier of a first computing site;
wherein the first computing site is the computing site to which the terminal is connected after selecting the computing site;
wherein the first user plane function comprises at least one of the following:
a local Protocol Data Unit (PDU) session anchor user plane function;
a user plane function with an uplink classifier or a branch point function.

3. An information processing method, executed by a terminal, the method comprising:
receiving a mobility control policy sent by a first network function, and selecting a first access network node according to the mobility control policy; or
receiving target computing site information sent by an Application Server (AS), and executing a process of relocating a computing site or a process of rediscovering a computing site according to the target computing site information.

4. The method according to claim 3, wherein the target computing site information comprises at least one of the following:
an identifier of a first computing site, wherein the first computing site is a computing site to which the terminal is connected after selecting the computing site;
an identifier of a second computing site, wherein the second computing site is a computing site to which the terminal is connected before selecting the computing site.

5. The method according to claim 3, wherein the process of relocating a computing site or the process of rediscovering a computing site implements at least one of the following:
updating an address of the second computing site to an address of the first computing site;
establishing a session to the first computing site.

6. The method according to claim 3, wherein the method further comprises:
establishing a session between the terminal and the first computing site according to the mobility control policy.

7. The method according to claim 6, wherein the address of the first computing site is obtained through at least one of the following methods:
obtaining from an Application Server (AS);
obtaining from the mobility control policy sent by the first network function; or
determining when performing computing site rediscovery according to the mobility control policy sent by the first network function.

8. An information processing method, executed by a second network function, the method comprising:
receiving computing power scheduling policy information sent by an Application Server (AS);
determining a mobility control policy according to the computing power scheduling policy information;
sending the mobility control policy to a third network function or the first network function.

9. The method according to claim 8, wherein the computing power scheduling policy information is obtained by the Application Server (AS) when a first condition is satisfied;
wherein the first condition comprises one of the following:
receiving location information of the terminal sent by the second network function;
detecting that the second computing site is not applicable to the terminal, wherein the second computing site is a computing site to which the terminal is connected before selecting the computing site;
detecting that a cell accessed by the terminal does not meet a connection requirement of the terminal;
receiving a signal measurement report of the terminal sent by the second network function.

10. The method according to claim 8, further comprising:
receiving location information of the terminal sent by the first network function or the third network function, and sending the location information of the terminal to the Application Server (AS); and/or
receiving a signal measurement report of the terminal sent by the terminal or the second access network node, and sending the signal measurement report of the terminal to the Application Server (AS).

11. The method according to claim 10, further comprising:
sending a subscription notification for a terminal location change event to the first network function or the third network function; or
sending terminal location request information to the first network function or the third network function; or
sending a subscription notification for a signal measurement report to the terminal or the second access network node; or
sending signal measurement report request information to the terminal or the second access network node.

12. An information processing method, executed by an Application Server (AS), the method comprising:
obtaining computing power scheduling policy information when a first condition is satisfied;
according to the computing power scheduling policy information, sending target computing site information to the terminal; and/or sending the computing power scheduling policy information to the second network function, the computing power scheduling policy information being used by the second network function to determine a mobility control policy;
wherein the first condition comprises one of the following:
receiving location information of the terminal sent by the second network function;
detecting that the second computing site is not applicable to the terminal, wherein the second computing site is a computing site to which the terminal is connected before selecting the computing site;
detecting that a cell accessed by the terminal does not meet a connection requirement of the terminal;
receiving a signal measurement report of the terminal sent by the second network function.

13. The method according to claim 12, wherein the target computing site information comprises at least one of the following:
an identifier of a first computing site, wherein the first computing site is a computing site to which the terminal is connected after selecting the computing site;
an identifier of the second computing site.

14. The method according to claim 12, wherein before obtaining the computing power scheduling policy information, the method further comprises:
determining an access network identifier.

15. An information processing method, executed by a third network function, the method comprising:
receiving the mobility control policy transmitted from the second network function, and executing a process of relocating a computing site or a process of rediscovering a computing site according to the identifier of the first computing site determined from the mobility control policy; or
receiving first information sent by the first network function, and selecting a first user plane function according to the first information;
wherein the first user plane function comprises at least one of the following:
a local Protocol Data Unit (PDU) session anchor user plane function;
a user plane function with an uplink classifier or a branch point function;
the first information comprises at least one of the following:
a Data Network Access Identifier (DNAI) of a target data network;
an identifier of the first user plane function;
an identifier of the first computing site, wherein the first computing site is a computing site to which the terminal is connected after selecting the computing site.

16. A communication device, wherein the communication device is a first network function, the communication device comprises a memory, a transceiver, and a processor:
the memory is configured to store a computer program; the transceiver is configured to send and receive data under the control of the processor; the processor is configured to read the computer program in the memory and perform the following operations:
receiving a mobility control policy sent by a second network function;
sending information to a target device according to the mobility control policy, wherein the information is used by the target device to execute a process of selecting a computing site.

17. The communication device according to claim 16, wherein the processor is configured to read the computer program in the memory and perform at least one of the following operations:
sending the mobility control policy to a terminal, the mobility control policy being used by the terminal to select a first access network node;
sending an access network identifier in the mobility control policy to a second access network node, the access network identifier being used by the second access network node to determine the first access network node;
sending first information in the mobility control policy to a third network function, the first information being used by the third network function to select a first user plane function; the first information comprises at least one of the following: a Data Network Access Identifier (DNAI) of a target data network, an identifier of the first user plane function, an identifier of a first computing site;
wherein the first computing site is a computing site to which the terminal is connected after selecting the computing site;
wherein the first user plane function comprises at least one of the following:
a local Protocol Data Unit (PDU) session anchor user plane function;
a user plane function with an uplink classifier or a branch point function.

18. A communication device, wherein the communication device is a terminal, the communication device comprising a memory, a transceiver, and a processor:
the memory is configured to store a computer program; the transceiver is configured to send and receive data under the control of the processor; the processor is configured to read the computer program in the memory and perform the following operations:
receiving a mobility control policy sent by a first network function, and selecting a first access network node according to the mobility control policy; or
receiving target computing site information sent by an Application Server (AS), and executing a process of relocating a computing site or a process of rediscovering a computing site according to the target computing site information.

19. The communication device according to claim 18, wherein the target computing site information comprises at least one of the following:
an identifier of a first computing site, wherein the first computing site is a computing site to which the terminal is connected after selecting the computing site;
an identifier of a second computing site, wherein the second computing site is a computing site to which the terminal is connected before selecting the computing site.

20. The communication device according to claim 18, wherein the process of relocating a computing site or the process of rediscovering a computing site implements at least one of the following:
updating an address of the second computing site to an address of the first computing site;
establishing a session to the first computing site.

21. The communication device according to claim 18, wherein the processor is configured to read the computer program in the memory and further perform the following operation:
establishing a session between the terminal and the first computing site according to the mobility control policy.

22. The communication device according to claim 21, wherein obtaining the address of the first computing site comprises one of the following:
obtaining from an Application Server (AS);
obtaining from the mobility control policy sent by the first network function; or
determining when performing computing site rediscovery according to the mobility control policy sent by the first network function.

23. A communication device, wherein the communication device is a second network function, the communication device comprises a memory, a transceiver, and a processor:
the memory is configured to store a computer program; the transceiver is configured to send and receive data under the control of the processor; the processor is configured to read the computer program in the memory and perform the following operations:
receiving computing power scheduling policy information sent by an Application Server (AS);
determining a mobility control policy according to the computing power scheduling policy information;
sending the mobility control policy to a third network function or the first network function.

24. The communication device according to claim 23, wherein the computing power scheduling policy information is obtained by the Application Server (AS) when a first condition is satisfied;
wherein the first condition comprises one of the following:
receiving location information of the terminal sent by the second network function;
detecting that the second computing site is not applicable to the terminal, wherein the second computing site is a computing site to which the terminal is connected before selecting the computing site;
detecting that a cell accessed by the terminal does not meet a connection requirement of the terminal;
receiving a signal measurement report of the terminal sent by the second network function.

25. The communication device according to claim 23, wherein the processor is configured to read the computer program in the memory and further perform the following operations:
receiving location information of the terminal sent by the first network function or the third network function, and sending the location information of the terminal to the Application Server (AS); and/or
receiving a signal measurement report of the terminal sent by the terminal or the second access network node, and sending the signal measurement report of the terminal to the Application Server (AS).

26. The communication device according to claim 25, wherein the processor is configured to read the computer program in the memory and further perform the following operations:
sending a subscription notification for a terminal location change event to the first network function or the third network function; or
sending terminal location request information to the first network function or the third network function; or
sending a subscription notification for a signal measurement report to the terminal or the second access network node; or
sending signal measurement report request information to the terminal or the second access network node.

27. A communication device, wherein the communication device is an Application Server (AS), the communication device comprises a memory, a transceiver, and a processor:
the memory is configured to store a computer program; the transceiver is configured to send and receive data under the control of the processor; the processor is configured to read the computer program in the memory and perform the following operations:
obtaining computing power scheduling policy information when a first condition is satisfied;
according to the computing power scheduling policy information, sending target computing site information to the terminal; and/or sending the computing power scheduling policy information to the second network function, the computing power scheduling policy information being used by the second network function to determine a mobility control policy;
wherein the first condition comprises one of the following:
receiving location information of the terminal sent by the second network function;
detecting that the second computing site is not applicable to the terminal, wherein the second computing site is a computing site to which the terminal is connected before selecting the computing site;
detecting that a cell accessed by the terminal does not meet a connection requirement of the terminal;
receiving a signal measurement report of the terminal sent by the second network function.

28. The communication device according to claim 27, wherein the target computing site information comprises at least one of the following:
an identifier of a first computing site, wherein the first computing site is a computing site to which the terminal is connected after selecting the computing site;
an identifier of the second computing site.

29. The communication device according to claim 27, wherein before the obtaining unit obtains the computing power scheduling policy information, the processor is further configured to read the computer program in the memory and perform the following operation:
determining an access network identifier.

30. A communication device, wherein the communication device is a third network function, the communication device comprises a memory, a transceiver, and a processor:
the memory is configured to store a computer program; the transceiver is configured to send and receive data under the control of the processor; the processor is configured to read the computer program in the memory and perform the following operations:
receiving the mobility control policy transmitted from the second network function, and executing a process of relocating a computing site or a process of rediscovering a computing site according to the identifier of the first computing site determined from the mobility control policy; or
receiving first information sent by the first network function, and selecting a first user plane function according to the first information;
wherein the first user plane function comprises at least one of the following:
a local Protocol Data Unit (PDU) session anchor user plane function;
a user plane function with an uplink classifier or a branch point function;
the first information comprises at least one of the following:
a Data Network Access Identifier (DNAI) of a target data network;
an identifier of the first user plane function;
an identifier of the first computing site, wherein the first computing site is a computing site to which the terminal is connected after selecting the computing site.

31. An information processing apparatus, applied to a first network function, the apparatus comprising:
a first receiving unit, configured to receive a mobility control policy sent by a second network function;
a first execution unit, configured to send information to a target device according to the mobility control policy, wherein the information is used by the target device to execute a process of selecting a computing site.

32. An information processing apparatus, applied to a terminal, the apparatus comprising:
a second receiving unit, configured to receive a mobility control policy sent by a first network function and select a first access network node according to the mobility control policy; or
receive target computing site information sent by an Application Server (AS) and execute a process of relocating a computing site or a process of rediscovering a computing site according to the target computing site information.

33. The apparatus according to claim 32, wherein the target computing site information comprises at least one of the following:
an identifier of a first computing site, wherein the first computing site is the computing site to which the terminal is connected after selecting the computing site;
an identifier of a second computing site, wherein the second computing site is a computing site to which the terminal is connected before selecting the computing site.

34. The apparatus according to claim 32, wherein the process of relocating a computing site or the process of rediscovering a computing site implements at least one of the following:
updating an address of the second computing site to an address of the first computing site;
establishing a session to the first computing power nod.

35. The apparatus according to claim 32, wherein when the mobility control policy sent by the first network function is received, the apparatus further comprises:
an establishment unit, configured to establish a session between the terminal and the first computing site according to the mobility control policy.

36. The apparatus according to claim 35, wherein the address of the first computing site is obtained through at least one of the following methods:
obtaining from an Application Server (AS);
obtaining from the mobility control policy sent by the first network function; or
determining when performing computing site rediscovery according to the mobility control policy sent by the first network function.

37. An information processing apparatus, applied to a second network function, the apparatus comprising:
a fourth receiving unit, configured to receive computing power scheduling policy information sent by an Application Server (AS);
a second determination unit, configured to determine a mobility control policy according to the computing power scheduling policy information;
a first sending unit, configured to send the mobility control policy to a third network function or the first network function.

38. An information processing apparatus, applied to an Application Server (AS), the apparatus comprising:
an obtaining unit, configured to obtain computing power scheduling policy information when a first condition is satisfied;
according to the computing power scheduling policy information, send target computing site information to the terminal; and/or send the computing power scheduling policy information to the second network function, the computing power scheduling policy information being used by the second network function to determine a mobility control policy;
wherein the first condition comprises one of the following:
receiving location information of the terminal sent by the second network function;
detecting that the second computing site is not applicable to the terminal, wherein the second computing site is a computing site to which the terminal is connected before selecting the computing site;
detecting that a cell accessed by the terminal does not meet a connection requirement of the terminal;
receiving a signal measurement report of the terminal sent by the second network function.

39. An information processing apparatus, applied to a third network function, the apparatus comprising:
a second execution unit, configured to receive a mobility control policy transmitted from the second network function, and executing a process of relocating a computing site or a process of rediscovering a computing site according to the identifier of the first computing site determined from the mobility control policy; or
receive first information sent by the first network function, and select a first user plane function according to the first information;
wherein the first user plane function comprises at least one of the following:
a local Protocol Data Unit (PDU) session anchor user plane function;
a user plane function with an uplink classifier or a branch point function;
the first information comprises at least one of the following:
a Data Network Access Identifier (DNAI) of a target data network;
an identifier of the first user plane function;
an identifier of the first computing site, wherein the first computing site is a computing site to which the terminal is connected after selecting the computing site.

40. A processor-readable storage medium, wherein the processor-readable storage medium stores a computer program, and the computer program is configured to cause a processor to execute the method according to any one of claims 1 to 20.
